# EUROPÄISCHE PATENTANMELDUNG

(11) **EP 4 317 027 A1**
(43) Veröffentlichungstag der Anmeldung: **07.02.2024**
(21) Anmeldenummer: 23189634.1
(22) Anmeldetag: 04.08.2023
(51) Int. Cl.: B65G 1/04, B65G 1/137, G06Q 10/087

(54) **SHUTTLE-SYSTEM UND VERFAHREN ZUM BETREIBEN EINES SHUTTLE-SYSTEMS MIT HILFE EINER STEUERUNGSEINRICHTUNG**

(30) Priorität: 05.08.2022 DE 102022119780
(71) Anmelder: Gebhardt Fördertechnik GmbH, 74889 Sinsheim (DE)
(72) Erfinder: BRANNER, Fabian, 74915 Waibstadt (DE); GEBHARDT, Marco, 74889 Sinsheim (DE); KUGLER, Wilfried, 74379 Ingersheim (DE)
(74) Vertreter: Patentanwälte und Rechtsanwalt Weiß, Arat & Partner mbB

(57) **Zusammenfassung**

Verfahren zum Betreiben eines Shuttle-Systems mit Hilfe einer Steuerungseinrichtung, wobei das Shuttle-System ein Regal mit einem Fahrweg (5) und einem mehrfachtiefen Lagerkanal (6A, 6B, 6C, 6D) mit zumindest zwei Lagerplätzen (A1, ..., A4; B1, ..., B4; C1, ...) umfasst, wobei das Shuttle-System weiterhin zumindest zwei Shuttles umfasst, wobei die Shuttles (7) eingerichtet sind, Fördergüter (8) ein-, aus- oder umzulagern, wobei die Shuttles (7) Aufträge zum Ein-, Aus- oder Umlagern eines Förderguts (8) von der Steuerungseinrichtung erhalten,. Die Verfahren können zum Verhindern von Blockade-Situationen und/oder zur Erhöhung einer Lagerdichte verschiedene Maßnahmen umfassen.

## Beschreibung

### Technisches Gebiet

Die Erfindung betrifft ein Shuttle-System und ein Verfahren zum Betreiben eines Shuttle-Systems mit Hilfe einer Steuerungseinrichtung gemäss den unabhängigen Ansprüchen.

### Stand der Technik

Verfahren zum Betreiben von Shuttle-Systemen mit Hilfe von Steuerungseinrichtungen sind aus dem Stand der Technik bekannt. Bei bekannten Verfahren kann es zu Blockade-Situationen und/oder einer nicht optimalen Ausnutzung der Lagerplätze, somit also zu einer niedrigen Lagerdichte kommen.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Ansprüche. Vorteilhafte Ausgestaltungen sind in den abhängigen Ansprüchen beschrieben.

Die vorliegende Erfindung umfasst mehrere alternative Verfahren, für die jeweils gesondert Schutz begehrt wird. Diesen Verfahren ist gemein, dass sie dem Betreiben eines Shuttle-Systems mit Hilfe einer Steuerungseinrichtung dienen. Das Shuttle-System umfasst ein Regal, teilweise auch als Lager bezeichnet, mit einem Fahrweg und einem vorzugsweise mehrfachtiefen Lagerkanal, welcher wiederum zumindest zwei Lagerplätze umfasst, also zumindest zweifachtief ist. Ferner umfasst das Shuttle-System zumindest zwei Shuttles, welche eingerichtet sind, Lager- oder Fördergüter ein-, aus- oder umzulagern. Die Shuttles erhalten Aufträge zum Ein-, Aus- oder Umlagern eines Lager- oder Förderguts von der Steuerungseinrichtung.

Bei den Shuttles handelt es sich vorzugsweise um horizontal sich bewegende Fahrzeuge zum Ein-, Aus- und Umlagern von Fördergut, die beispielsweise in einem Kanallager zum Einsatz kommen. Insbesondere kann es sich um Fahrzeuge handeln, welche sich selbstständig ausschliesslich horizontal bewegen können. Nachstehend noch näher beschriebene Lifte können die Shuttles auch vertikal versetzen, also insbesondere einen Ebenen-Wechsel ermöglichen.

Bei dem Lager- oder Fördergut kann es sich um Paletten handeln. Das Shuttle-System kann als Paletten-Lager ausgebildet sein.

Unabhängig davon, ob das betreffende Gut momentan transportiert wird, bereits eingelagert wurde, oder in einem anderweitigen Zustand vorliegt, wird im Folgenden der Einfachheit halber lediglich von "Fördergut" anstelle von "Lager-oder Fördergut" gesprochen.

Das Shuttle-System kann ein Regal mit zahlreichen Fahrwegen und einer Vielzahl vorzugsweise mehrfachtiefer Lagerkanäle mit jeweils zwei, drei, vier oder mehr Lagerplätzen umfassen. Vorzugsweise ist das Regal des Shuttle-Systems als Kanallager, insbesondere Paletten-Kanallager ausgeführt.

Das Shuttle-System kann Gassen umfassen, welche aus der Intralogistik grundsätzlich bekannt sind.

Das Regal kann zumindest eine, vorzugsweise jedoch auch mehrere Ebenen umfassen, welche jeweils Fahrwege und Lagerkanäle umfassen, die von den Shuttles bedient und befahren werden.

Das Shuttle-System ist vorzugsweise derart eingerichtet, dass es grundsätzlich möglich ist und somit grundsätzlich das Risiko besteht, dass zwei Shuttles zur selben Zeit einen Auftrag für denselben Lagerkanal erhalten, und diesen im Wesentlichen zeitgleich auszuführen versuchen. Umfasst das Regal beispielsweise mehrere Ebenen, so besteht vorzugsweise die Möglichkeit und somit das Risiko, dass sich zwei Shuttles gleichzeitig in derselben Ebene bewegen und einen Auftrag für denselben Lagerkanal auszuführen versuchen.

Im Allgemeinen kann das Regal mehrere Fahrwege und mehrere, oft und insbesondere bevorzugt rechtwinklig zu diesen Fahrwegen angeordnete Lagerkanäle mit zwei, drei, vier oder mehr Lagerplätzen umfassen. Sind Hauptfahrwege sowie Verbindungs-Wege zwischen diesen Hauptfahrwegen im Lager vorhanden, so können die Lagerkanäle rechtwinklig zu den Hauptfahrwegen angeordnet sein. Die Verbindungs-Wege können ebenfalls rechtwinklig zu den Hauptfahrwegen angeordnet sein.

Der Lagerkanal bzw. die Lagerkanäle können einen Kanal-Eingang aufweisen. Ein in der Regel gegenüber des Kanal-Eingangs liegendes Kanal-Ende kann als Sackgasse ausgestaltet sein.

Alternativ kann der Lagerkanal zwei Kanal-Eingänge aufweisen, und von beiden Seiten befahrbar sein. Solche Lagerkanäle können auch als Verbindungs-Wege zwischen den Hauptfahrwegen genutzt werden. Hierfür können unbeladene Shuttles auch unterhalb etwaiger im Lagerkanal abgestellter Fördergüter hindurchfahren. Weiterhin kann ein beladenes Shuttle zum Einlagern des Förderguts durch einen der Kanal-Eingänge in den Lagerkanal einfahren, und diesen durch den gegenüberliegenden Kanal-Eingang wieder verlassen, nachdem es sein Fördergut abgestellt hat. Beim Auslagern eines Förderguts gilt dasselbe, sofern zwischen dem Lagerplatz, an welchem das Fördergut aufgenommen wird, und dem für die Ausfahrt des Shuttles angedachten Kanal-Eingang keine mit Fördergütern belegten Lagerplätze liegen.

Eine Einfahrt-Richtung ist bei einem als Sackgasse ausgebildeten Lagerkanal die Richtung vom Kanal-Eingang zum Kanal-Ende.

Bei einem von beiden Seiten befahrbaren Lagerkanal ist die Einfahrt-Richtung die Richtung, welche von demjenigen Kanal-Eingang, durch welchen das Shuttle in den Lagerkanal einfährt, zum gegenüberliegenden Kanal-Eingang weist. Die Einfahrt-Richtung dreht sich in diesem Beispiel also um, wenn das Shuttle den gegenüberliegenden Kanal-Eingang zur Einfahrt benutzt.

Die Fördergüter können den Shuttles an einer Übergabestation, Schnittstelle oder dergleichen angedient werden. Beispielsweise kann dem Regal, manchmal auch als Lager bezeichnet, eine Lagervorzone zugeordnet sein, über welche die Fördergüter in das Regal eingespeist werden. Ferner kann daran gedacht sein, dem Shuttle-System Flurförderzeuge, insbesondere fahrerlose Transportsysteme (FTS) zuzuordnen. FTS können in einer Lagervorzone, an geeigneten Übergabestationen oder in anderer geeigneter Weise die Fördergüter an die Shuttles übergeben. Es kann auch daran gedacht sein, dass die Fördergüter über beliebige Mittel der Fördertechnik an die Shuttles übergeben oder im Allgemeinen in das Regal eingespeist werden; hierbei kann beispielsweise an Krane, Hebezeuge, gleislose Flurfördermittel wie Stapler, an Stetigförderer wie Bandförderer, Bahnsysteme, Rollenbahnen, Kettenförderer oder dergleichen gedacht sein.

Die Erfinder haben erkannt, dass es im Stand der Technik von einem Zeitpunkt der Auftragsvergabe und von einem Zeitpunkt, an welchem der anzusteuernde Lagerplatz für die durchzuführende Lageroperation festgelegt wurde, abhing, ob Blockade-Situationen oder eine niedrige Lagerdichte auftreten. Wenn der Auftrag bereits bei einer Aufnahme des Förderguts durch das FTS vergeben wurde, und der Lagerplatz hierbei bereits spezifiziert war, so konnte die Ankunftszeit des Förderguts am Zielkanal, d.h. am auftragsgemäss durch das Shuttle anzusteuernden Lagerkanal, durch folgende Faktoren beeinflusst werden: Verzögerungen, welche während des Transports des Förderguts durch das Shuttle auftreten; Verzögerungen, welche bei oder im Zusammenhang mit der Übergabe des Förderguts auf das Shuttle auftreten sowie Verzögerungen, welche während der Fahrt des Shuttles zum Zielkanal auftreten. Die vorgenannten Verzögerungen konnten sich summieren, was das Risiko von Blockade-Situationen weiter steigerte.

Die Verfahren gemäss der vorliegenden Erfindung sind besonders geeignet, Blockade-Situationen und zu geringe Lagerdichten in Shuttle-Systemen zu verhindern, welchen fahrerlose Transportsysteme (FTS) zugeordnet sind, bei denen die Fördergüter also insbesondere von einem FTS an ein Shuttle übergeben werden. Diese Übergabe kann direkt oder indirekt erfolgen.

Die Verfahren der vorliegenden Erfindung sind jedoch auch geeignet, Blockade-Situationen und zu niedrige Lagerdichten in Shuttle-Systemen ohne Vorzone sowie in Shuttle-Systemen mit einer Vorzone zu verhindern, in welcher beliebige Mittel der Fördertechnik, also nicht zwingend FTS, zum Einsatz kommen.

Vorzugsweise verhindern oder vermeiden die Verfahren gemäss der vorliegenden Erfindung Blockade-Situationen und zu niedrige Lagerdichten. Es kann Anwendungsfälle geben, in denen es genügt, wenn die vorgenannten Probleme mit deutlich niedrigerer Häufigkeit auftreten, also lediglich vermieden, aber nicht verhindert werden. Es kann jedoch auch Anwendungsfälle geben, in welchen die vorgenannten Probleme vollständig verhindert werden müssen. Weiterhin verhindern oder vermeiden die meisten Varianten der Verfahren sowohl Blockade-Situationen als auch zu niedrige Lagerdichten. Einige der Varianten verhindern oder vermeiden jedoch nur entweder Blockade-Situationen oder zu niedrige Lagerdichten. Insbesondere das Verhindern oder Vermeiden von Blockade-Situationen allein kann jedoch die Effizienz und den Durchsatz eines Shuttle-Systems signifikant steigern.

Bei der Steuerungseinrichtung kann es sich um eine beliebige, gegebenenfalls auch einfach ausgeführte Einrichtung zur Steuerung eines Lagers handeln. Die Steuerungseinrichtung kann aus den für die Steuerung des Lagers nötigen Software-Komponenten und den für ihre Funktion nötigen Hardware-Komponenten bestehen.

Vorzugsweise handelt es sich bei einer Steuerungseinrichtung jedoch um ein komplexes und übergeordnetes System.

Die Steuerungseinrichtung kann beispielsweise ein Lagerverwaltungssystem sein. Ein Lagerverwaltungssystem ist vorzugsweise ein System zur Steuerung, Kontrolle und Optimierung eines Lagers. Lagerverwaltungssysteme werden manchmal auch als Warehouse Management Systeme bezeichnet. Vorzugsweise handelt es sich bei einem Lagerverwaltungssystem um ein komplexes und übergeordnetes System, welches auch der Kontrolle und Optimierung des Lagers dient, und vor allem aus den dafür nötigen Software-Komponenten und den für ihre Funktion nötigen Hardware-Komponenten bestehen kann.

Der Begriff Steuerungseinrichtung umfasst aber auch ein dem Lagerverwaltungssystem übergeordnetes System bestehend aus dem

Lagerverwaltungssystem und weiteren Komponenten wie beispielsweise einem Enterprise Resource Planning System (ERP-System), einem Materialfluss-System und Speicherprogrammierbaren Steuerungen (SPS). Das Materialfluss-System und die SPS können hierbei dem Lagerverwaltungssystem untergeordnet sein.

Ein Einlagern meint vorzugsweise ein Abstellen eines Förderguts auf einem Lagerplatz in einem Lagerkanal, insbesondere durch ein Shuttle. Ein Auslagern meint vorzugsweise ein Aufnehmen eines Förderguts, welches auf einem Lagerplatz in einem Lagerkanal steht, vorzugweise durch ein Shuttle. Ein Umlagern meint ein Aufnehmen eines Förderguts, welches auf einem Lagerplatz in einem Lagerkanal steht, und ein anschliessendes Verbringen dieses Förderguts an einen anderen Ort innerhalb des Lagers.

Ein Auftrag meint vorzugsweise eine Anweisung, welche ein Shuttle direkt oder indirekt von der Steuerungseinrichtung erhält. Vorzugsweise spezifiziert der Auftrag zumindest die durchzuführende Lageroperation, d.h. ob ein Einlagern, ein Auslagern oder ein Umlagern stattfinden soll, sowie den Lagerkanal, in welchem diese Lageroperation durchzuführen ist. In einigen Ausführungsformen von einigen der erfindungsgemässen Verfahren kann der Auftrag auch zusätzlich den Lagerplatz innerhalb des Lagerkanals spezifizieren, an welchem die Lageroperation durchzuführen ist.

Im Rahmen der vorliegenden Erfindung ist ein "aktiver Auftrag" vorzugsweise ein Auftrag, welcher in der Steuerungseinrichtung bereits existiert, aber noch nicht delegiert, insbesondere noch nicht an ein Shuttle vergeben wurde. Das Vergeben eines Auftrags meint im Rahmen der vorliegenden Erfindung vorzugsweise das Vergeben an ein Shuttle.

Ein "offener Auftrag" ist vorzugsweise ein Auftrag, welcher bereits an ein Shuttle vergeben wurde, von diesem aber noch nicht abgearbeitet, d.h. erledigt, wurde. Im Rahmen der vorliegenden Erfindung kann daran gedacht sein, dass auch offene Aufträge noch durch die Steuerungseinrichtung modifiziert werden können.

Ein "erledigter Auftrag" ist ein vom Shuttle abgearbeiteter, also erledigter Auftrag.

Ein Auftrag, der aus einem Einlagern eines Förderguts besteht, kann insbesondere dann als erledigt betrachtet werden, wenn das Fördergut auf dem Lagerplatz abgestellt wurde, und das Shuttle den betreffenden Lagerkanal wieder verlassen hat.

Ein Auftrag, der aus einem Auslagern eines Förderguts besteht, kann insbesondere frühestens dann als erledigt betrachtet werden, wenn das Fördergut aufgenommen wurde, und das Shuttle den betreffenden Lagerkanal wieder verlassen hat. Dieser Auftrag kann aber einem alternativen Ausführungsbeispiel gemäss auch erst dann als erledigt betrachtet werden, wenn das auszulagernde Fördergut an einem anderen Ort eingelagert oder abgestellt oder an ein FTS oder ein Mittel der Fördertechnik wie einen Kettenförderer oder einen Bandförderer übergeben wurde. Analoges gilt für einen Auftrag, der aus einem Umlagern eines Förderguts besteht.

Eine Auftragsvergabe, d.h. insbesondere die Delegierung eines aktiven Auftrags durch die Steuerungseinrichtung an ein Shuttle, so dass der vormals aktive Auftrag als offener Auftrag vorliegt, kann in manchen Varianten der erfindungsgemässen Verfahren bereits den zu wählenden Lagerplatz spezifizieren. In anderen Varianten steht zum Zeitpunkt der Auftragsvergabe nur der zu wählende Lagerkanal, nicht aber der Lagerplatz innerhalb dieses Lagerkanals fest.

Eine Blockade-Situation meint beispielsweise eine Situation, bei welcher ein erstes Shuttle gemäss eines Auftrags eine Lageroperation an einem bestimmten Lagerplatz durchführen soll, wobei ein zweites Shuttle zuvor auf einem zwischen diesem Lagerplatz und dem vom Shuttle zu benutzenden Kanal-Eingang liegenden Lagerplatz ein Fördergut abgestellt, insbesondere eingelagert, hat. Das erste Shuttle kann die Lageroperation nicht am auftragsgemässen Lagerplatz durchführen, weil es dazu den bereits belegten und zwischen dem zu benutzenden Kanal-Eingang und dem auftragsgemässen Lagerplatz liegenden Lagerplatz, welcher durch das vom zweiten Shuttle dort zuvor abgestellte Fördergut belegt ist, passieren müsste. Eine solche Blockade-Situation kann beispielsweise auftreten, wenn zwei Shuttles in einer anderen als der prognostizierten Reihenfolge am Lagerkanal, insbesondere am Kanal-Eingang eintreffen. Im Allgemeinen kann im Rahmen der vorliegenden Erfindung unter einer Blockade-Situation eine Situation verstanden werden, in welcher die Durchführung einer Lageroperation durch eines von zwei Shuttles dazu führt, dass das andere Shuttle seine Lageroperation nicht mehr durchführen kann. Eine solche Blockade-Situation kann vorübergehend sein, und beispielsweise dadurch gelöst werden, dass ein "zu spät" eintreffendes Shuttle seine Lageroperation durchführt. Eine solche Blockade-Situation kann aber auch dahingehend dauerhaft auftreten, als sie, wenn sie einmal eingetreten ist, ohne Modifikation zumindest eines Auftrags nur gelöst werden könnte, indem die Lageroperation, welche die Blockade-Situation verursacht, rückgängig gemacht wird. Beide Varianten, also zeitweise und dauerhaft auftretende Blockade-Situationen stören den Betrieb eines Shuttle-Systems und senken seine Effizienz. Beide Blockade-Situationen können durch die Verfahren gemäss der vorliegenden Erfindung verhindert werden.

Eine Voraussetzung dafür, dass eine vorübergehende Blockade-Situation nach dem Eintreffen des "verspäteten" Shuttles automatisch gelöst wird, kann darin bestehen, dass das "nicht verspätete" Shuttle entweder nicht in den Lagerkanal einfährt, weil es beispielsweise mit seinen Bordmitteln wie Sensoren oder dergleichen feststellt oder ihm mitgeteilt wird, dass eine Blockade-Situation aufgetreten ist. Alternativ kann das "nicht verspätete" Shuttle zwar in den Lagerkanal einfahren, diesen aber wieder verlassen, wenn es festgestellt oder erfahren hat, dass eine Blockade-Situation aufgetreten ist. In jedem Fall kann eine automatische Auflösung der Blockade-Situation es erfordern, dass das "nicht verspätete" nicht im Lagerkanal wartet und den Kanal-Eingang nicht blockiert.

Eine niedrige Lagerdichte meint vorzugsweise eine Situation, in welcher zwischen zwei belegten Lagerplätzen innerhalb eines Lagerkanals ein nicht belegter, d.h. freier Lagerplatz liegt. Um ausgehend von einer solchen Situation die Lagerdichte zu erhöhen, muss eines der Fördergüter, welches auf einem der belegten Lagerplätze steht, aus- oder umgelagert werden, damit ein Fördergut auf dem freien Lagerplatz eingelagert werden kann. Ein solches Aus- oder Umlagern ist umständlich und zeitraubend. Solange es aber nicht erfolgt, kann der vorbeschriebene freie Lagerplatz nicht genutzt werden. Daher ist eine niedrige Lagerdichte zu vermeiden.

Das Shuttle-System kann als Ebenen-gebundenes System ausgebildet sein und eine oder vorzugsweise mehrere Ebenen umfassen. Optional können Gassen vorhanden sein. Hierbei sind vorzugsweise jeweils zumindest zwei Shuttles pro Ebene vorhanden. Diese Shuttles können sich vorzugsweise entlang der Hauptfahrwege und quer zu diesen Hauptfahrwegen, d.h. beliebig innerhalb der Ebenen bewegen. Ein solches System kann Lifte für das Fördergut umfassen, insbesondere, wenn mehrere Ebenen vorhanden sind. Solche Ebenen-gebundenen Shuttle-Systeme kommen vorzugsweise dann im Rahmen der vorliegenden Erfindung zum Einsatz, wenn sie in zumindest einer Ebene zumindest zwei Shuttles umfassen.

Das Shuttle-System kann alternativ als Gassen-gebundenes System ausgebildet sein und eine oder vorzugsweise mehrere Ebenen sowie eine oder vorzugsweise mehrere Gassen umfassen. Die Shuttles können sich in einem solchen System innerhalb der Gassen horizontal und vertikal bewegen, die Gassen jedoch nicht wechseln. Eine horizontale Bewegung der Shuttles ist somit auf die jeweils zugehörige Gasse beschränkt. Ein solches System kann Lifte für die Shuttles umfassen, um den Shuttles einen Ebenen-Wechsel zu ermöglichen. Solche Gassen-gebundenen Shuttle-Systeme kommen vorzugsweise dann im Rahmen der vorliegenden Erfindung zum Einsatz, wenn sie in zumindest zwei Shuttles umfassen.

Bei dem Ebenen-gebundenen System und bei dem Gassen-gebundenen System haben die Shuttles vorzugsweise zwei Freiheitsgrade der Bewegung.

Das Shuttle-System kann auch als Gassen- und Ebenen-gebundenes Shuttle-System ausgebildet sein. Solche Gassen- und Ebenen-gebundenen Shuttle-Systeme kommen vorzugsweise dann im Rahmen der vorliegenden Erfindung zum Einsatz, wenn sie in zumindest zwei Shuttles umfassen.

Ferner kann das Shuttle-System als ungebundenes Shuttle-System ausgebildet sein und eine oder vorzugsweise mehrere Ebenen umfassen. Optional können Gassen vorhanden sein. In einem solchen System können Lifte für die Shuttles vorhanden sein, welche diesen eine Bewegung in vertikaler Richtung ermöglichen. Durch Fahrwege quer zu den Hauptfahrwegen oder quer zu etwaigen Gassen haben die Shuttles in einem ungebundenen System drei Freiheitsgrade der Bewegung. Ungebundene Systeme ermöglichen eine hohe Flexibilität. Der Durchsatz ungebundener Shuttle-Systeme kann durch Einschleusen weiterer Shuttles erhöht werden.

Grundsätzlich können Blockade-Situationen und eine niedrige Lagerdichte in allen vorbeschriebenen Shuttle-Systemen auftreten und mit den Verfahren gemäss der vorliegenden Erfindung verhindert werden. Da zusätzliche Shuttles in ungebundenen Systemen auch die Wahrscheinlichkeit des Auftretens von Blockade-Situationen erhöhen, kann die vorliegende Erfindung besonders in ungebundenen Systemen vorteilhaft angewandt werden.

Die erfindungsgemässen Verfahren können in Shuttle-System zum Einsatz kommen, bei denen die Bewegung der Shuttles zumindest teilweise dynamisch gestaltet ist, und beispielsweise eine dynamische Verkehrsregelung angewandt wird. Änderungen einer zu erwartenden Fahrtzeit eines Shuttles zu einem im Rahmen des auszuführenden Auftrags anzusteuernden Lagerkanal können beispielsweise dadurch auftreten, dass dieses Shuttle während der Fahrt auf ein Hindernis trifft, beispielsweise ein seinen Weg kreuzendes anderes Shuttle, und abbremst. Weiterhin können Änderungen der zu erwartenden Fahrtzeit im Fall von Störungen auftreten. Beispielsweise kann das betreffende Shuttle selbst eine Störung aufweisen, welche die Fahrtzeit verlängert. Weiterhin kann ein anderes Shuttle störungsbedingt fahrunfähig auf der angedachten Route liegen, was eine Routen-Änderung erfordert. Weiterhin kann ein für den Ebenen-Wechsel genutzter Lift eine Störung aufweisen. Ferner kann eine Änderung der zu erwartenden Fahrtzeit auch dann auftreten, wenn ein manueller Eingriff, beispielsweise nach Durchführung einer Konturen- oder Gewichtskontrolle stattfinden muss.

Durch solche oft schwer vorauszusehenden Änderungen der üblicherweise im Voraus berechneten erwarteten Fahrtzeit können Blockade-Situationen besonders häufig auftreten, weil zwei Shuttles mit Aufträgen für denselben Lagerkanal dann entgegen der durchgeführten Berechnungen ungefähr gleichzeitig dort eintreffen. Dies gilt umso mehr für Fälle, in welchen eine zuständige Steuerungseinrichtung, beispielsweise eine sehr einfach ausgeführte Steuerungseinrichtung, überhaupt keine derartigen Berechnungen durchführt.

Die nachfolgend geschilderten alternativen Verfahren gemäss der vorliegenden Erfindung dienen jeweils dazu, eine Blockade-Situation zu verhindern und/oder eine Lagerdichte zu erhöhen. Die vorangehenden Details gelten hierbei für alle Verfahren gemäss der vorliegenden Erfindung.

Die nachfolgend beschriebenen Verfahren erfordern in der Regel keine Umbauten, hardwareseitige Umrüstungen oder dergleichen, und können daher auf einfache Weise in bestehenden Shuttle-Systemen implementiert werden.

Alle nachstehend beschriebenen Verfahren können dem Betreiben eines Shuttle-Systems mit Hilfe einer Steuerungseinrichtung dienen, wobei das Shuttle-System ein Regal mit einem Fahrweg und einem vorzugsweise mehrfachtiefen Lagerkanal mit zumindest zwei Lagerplätzen umfassen kann. Weiterhin kann das Shuttle-System zumindest zwei Shuttles umfassen, wobei die Shuttles eingerichtet sein können, Fördergüter ein-, aus- oder umzulagern, wobei die Shuttles Aufträge zum Ein-, Aus- oder Umlagern eines Förderguts von der Steuerungseinrichtung erhalten. Um eine Blockade-Situation zu verhindern und /oder die Lagerdichte zu erhöhen, können die Schritte der nachfolgend beschriebenen Verfahren ausgeführt werden.

Gemäss einem **ersten Verfahren** werden zur Erhöhung der Lagerdichte und/oder zur Verhinderung von Blockade-Situationen folgende Schritte durchgeführt:
- Sobald ein aktiver Auftrag zum Ein-, Aus- oder Umlagern eines Förderguts betreffend einen bestimmten Lagerkanal vorliegt, prüft die Steuerungseinrichtung, ob ein offener Auftrag zum Ein-, Aus- oder Umlagern betreffend diesen Lagerkanal vorliegt
- Liegt kein solcher offener Auftrag vor, so vergibt die Steuerungseinrichtung den aktiven Auftrag
- Liegt ein solcher offener Auftrag vor, so vergibt die Steuerungseinrichtung den aktiven Auftrag entweder erst dann, wenn der offene Auftrag erledigt wurde,
- oder die Steuerungseinrichtung modifiziert den aktiven Auftrag dahingehend, dass ein Lagerkanal gewählt wird, zu welchem kein offener Auftrag vorliegt.

Gemäss einer Ausführungsform des ersten Verfahrens vergibt die Steuerungseinrichtung den aktiven Auftrag, falls und sobald kein offener Auftrag betreffend denselben Lagerkanal vorliegt. Die Steuerungseinrichtung wartet somit, bis ein etwaiger offener Auftrag betreffend denselben Lagerkanal ausgeführt wurde.

Gemäss einer weiteren Ausführungsform des ersten Verfahrens modifiziert die Steuerungseinrichtung den aktiven Auftrag, indem sie einen alternativen Lagerkanal wählt.

In beiden vorgenannten Fällen wird vorzugsweise auch der Lagerplatz im Lagerkanal mit Auftragsvergabe oder Modifizierung des Auftrags vergeben.

Eine Priorisierung dahingehend, dass entweder bevorzugt abgewartet oder bevorzugt der Auftrag modifiziert wird, wenn für einen angedachten Lagerkanal bereits ein offener Auftrag vorliegt, kann anhand verschiedener Aspekte getroffen werden, und von zahlreichen Faktoren des Shuttle-Systems abhängig sein.

Beispielsweise kann eine solche Entscheidung basierend auf einem Vergleich einer zu erwartenden Warte-Dauer bis zur Beendigung des offenen Auftrags und einem Unterschied zu einer zu erwartenden Fahrtzeit zu einem alternativen Lagerkanal getroffen werden. Wenn ein zur Verfügung stehender alternativer Lagerkanal deutlich weiter entfernt ist, als der ursprünglich angedachte Kanal, und wenn der offene Auftrag betreffend den ursprünglich angedachten Kanal voraussichtlich in kurzer Zeit ausgeführt sein wird, so kann abgewartet werden. Andernfalls kann der Auftrag modifiziert werden.

Weitere Varianten sind denkbar.

Liegt kein offener Auftrag vor, so vergibt die Steuerungseinrichtung gemäss der ersten Alternative des ersten Verfahrens den aktiven Auftrag vorzugsweise zum nächstmöglichen Zeitpunkt. Der "nächstmögliche Zeitpunkt" meint hierbei vorzugsweise einen schnellstmöglichen geeigneten Zeitpunkt.

Da für jeden Lagerkanal, d.h. im Hinblick auf sämtliche Lagerplätze dieses Lagerkanals, zu jedem gegebenen Zeitpunkt nur ein einziger offener Auftrag existieren kann, können keine Blockadesituationen und auch keine zu niedrigen Lagerdichten auftreten. Diese treten schliesslich insbesondere dann auf, wenn in einem gegebenen Zeitraum zwei Shuttles jeweils einen offenen Auftrag betreffend denselben Lagerkanal ausführen.

Dies setzt selbstverständlich voraus, dass die der Reihe nach vergebenen Aufträge so geplant sind, dass bei konsekutiver Durchführung der Aufträge ohne zeitliche Überschneidung keine Blockadesituationen auftreten. Eine Steuerungseinrichtung wird die Aufträge üblicherweise so vergeben, dass weder Blockade-Situation noch zu niedrige Lagerdichten auftreten oder zu erwarten sind.

Gemäss einem **zweiten Verfahren** werden zur Erhöhung der Lagerdichte und/oder zur Verhinderung von Blockade-Situationen folgende Schritte durchgeführt:
- Ein Shuttle erhält einen Auftrag zum Einlagern eines Förderguts, wobei dieser Auftrag den anzusteuernden Lagerkanal, nicht aber den Lagerplatz spezifiziert
- Unmittelbar bevor das Shuttle in den Lagerkanal einfährt, wird der Auftrag dahingehend spezifiziert, dass dem Shuttle der Lagerplatz mitgeteilt wird, auf dem das Fördergut eingelagert werden soll.

Hierbei meint "unmittelbar bevor das Shuttle in den Lagerkanal einfährt" beispielsweise "frühestens oder genau dann, wenn das Shuttle in einen unmittelbar an den anzusteuernden Lagerkanal angrenzenden Hauptfahrweg einfährt", sozusagen also beim "vorletzten" Abbiegen des Shuttles vor der Einfahrt in den Lagerkanal.

Weiterhin kann "unmittelbar bevor das Shuttle in den Lagerkanal einfährt" auch "frühestens oder unmittelbar, nachdem das Shuttle drei, zwei oder eine Shuttle-Länge von dem Kanal-Eingang des Lagerkanals entfernt ist" meinen.

Weiterhin kann "unmittelbar bevor das Shuttle in den Lagerkanal einfährt" auch "frühestens oder unmittelbar, wenn das Shuttle fünf oder drei oder einen Meter von dem Kanal-Eingang des Lagerkanals entfernt ist" meinen.

Weiterhin kann "unmittelbar bevor das Shuttle in den Lagerkanal einfährt" auch "frühestens oder genau dann, wenn das Shuttle voraussichtlich in zehn, fünf oder zwei Sekunden am Kanal-Eingang ankommt" meinen.

Weiterhin kann "unmittelbar bevor das Shuttle in den Lagerkanal einfährt" auch "frühestens oder unmittelbar bei einem Auftrags-Fortschritt von zumindest oder genau 90%, 95% oder 99% in Bezug auf die voraussichtlich für den Auftrag benötigte Zeit" meinen.

Weiterhin kann "unmittelbar bevor das Shuttle in den Lagerkanal einfährt" auch "frühestens oder unmittelbar, wenn eine in Fahrtrichtung weisende Vorderkante oder Seite des Shuttles auf einer Höhe des Lagerkanals liegt" meinen. Hierbei meine "auf einer Höhe des Lagerkanals", dass das entlang beispielsweise des Hauptfahrwegs sich in Richtung auf den Lagerkanal zu bewegende Shuttle an einer Stelle ankommt, an welcher sich der Lagerkanal und der Hauptfahrweg kreuzen.

Im Allgemeinen kann "unmittelbar bevor das Shuttle in den Lagerkanal einfährt" auch die "Ankunft des Shuttles am Kanal-Eingang des Lagerkanals" meinen.

Wenn im Folgenden in Bezug auf das zweite Verfahren von der Ankunft des Shuttles am Kanal-Eingang gesprochen wird, so gelten die entsprechenden Ausführungen auch für sämtliche vorbeschriebenen Alternativen.

Zwischen der Auftragsvergabe und der Ankunft am Kanal-Eingang kann das Shuttle zu dem auftragsgemäss spezifizierten Lagerkanal fahren, sich also durch das Regal zu dem Lagerkanal bewegen.

Gemäss dem zweiten Verfahren wird also der Lagerplatz innerhalb des anzusteuernden Lagerkanals vor der Ankunft des Shuttles am Lagerkanal noch nicht spezifiziert.

Wird zwischen der Auftragsvergabe an das Shuttle und der Ankunft des Shuttles am Lagerkanal in diesem Lagerkanal ein Fördergut eingelagert, so führt dies nicht zu einer Blockadesituation. Eine solche Blockadesituation würde nur eintreten, wenn der Lagerplatz innerhalb des anzusteuernden Kanals bereits bei Auftragsvergabe oder zumindest deutlich vor der Ankunft des Shuttles am Lagerkanal feststünde. Wird der Lagerplatz hingegen erst nach Ankunft des Shuttles am Lagerkanal festgelegt und dem Shuttle mitgeteilt, so kann zwischen dieser Spezifizierung des Auftrags und dem Einlagern kein weiteres Shuttle ein weiteres Fördergut im selben Lagerkanal einlagern, sofern der Lagerkanal als Sackgasse ausgebildet ist. Die Verfügbarkeit des Lagerplatzes kann sich gemäss dem zweiten Verfahren bei einem solchen Lagerkanal nach der Spezifizierung des Auftrags hinsichtlich des Lagerplatzes nicht mehr ändern, da das betreffende Shuttle bereits am Kanal-Eingang steht und bereit ist, in den Lagerkanal einzufahren.

Ist der Lagerkanal nicht als Sackgasse ausgebildet, so besteht die Gefahr einer Blockade-Situation lediglich, wenn von beiden Seiten je ein Shuttle im Wesentlichen zeitgleich eintrifft, und diese Shuttles miteinander in Konflikt stehende Aufträge ausführen sollen, bei denen eine Blockade-Situation entstehen kann. Ein solches im Wesentlichen gleichzeitiges Eintreffen ist jedoch sehr unwahrscheinlich.

Dennoch kann im Rahmen des zweiten Verfahrens bei Shuttle-Systemen mit beidseitig befahrbaren Lagerkanälen daran gedacht sein, dass vor der Spezifizierung geprüft wird, ob sich im betreffenden Lagerkanal noch ein Shuttle befindet. Sollte dies der Fall sein, kann die Spezifizierung des Auftrags beispielsweise erst erfolgen, nachdem das noch im Lagerkanal befindliche Shuttle den Lagerkanal verlassen hat. Vorzugsweise erhält die Steuerungseinrichtung spätestens nachdem das noch im Lagerkanal befindliche Shuttle diesen verlassen hat, auch Informationen über die im Lagerkanal durchgeführte Lageroperation, und kann diese bei der Spezifizierung des Auftrags für das vor dem Lagerkanal befindliche Shuttle berücksichtigen.

Hierbei kann, auch wenn der Lagerkanal als Sackgasse ausgebildet ist, daran gedacht sein, dass das ankommende Shuttle derart vor dem Kanal-Eingang wartet, so dass das noch im Lagerkanal befindliche Shuttle diesen ungehindert verlassen kann.

Bei der Auftragsvergabe steht der Lagerplatz zwar noch nicht endgültig fest. Dennoch kann dem Shuttle ein vorläufiger Lagerplatz mitgeteilt werden. Die Spezifizierung kann also einem Ausführungsbeispiel gemäss als "endgültige Festlegung" verstanden werden, und schliesst eine vorläufige Festlegung zu einem früheren Zeitpunkt, d.h. zu irgendeinem Zeitpunkt vor der Ankunft am Kanal-Eingang, nicht aus.

Wurde dem Shuttle ein vorläufiger Lagerplatz mitgeteilt, so kann im Rahmen der Spezifizierung nach Ankunft am Kanal-Eingang dieser Lagerplatz bestätigt werden, wenn zwischenzeitlich beispielsweise kein weiteres Fördergut im betreffenden Lagerkanal eingelagert wurde, was zu einer Blockadesituation führen könnte. Wurde zwischenzeitlich, d.h. zwischen der vorläufigen Mitteilung des Lagerplatzes im Rahmen der Auftragsvergabe und der Ankunft des Shuttles am Kanal-Eingang, ein weiteres Fördergut im betreffenden Lagerkanal eingelagert, so kann zur Vermeidung einer Blockadesituation der vorläufige Lagerplatz geändert werden.

Wurde dem Shuttle hingegen kein vorläufiger Lagerplatz mitgeteilt, so ist die Spezifizierung nach Ankunft am Kanal-Eingang die erste und endgültige Mitteilung des Lagerplatzes an das Shuttle.

Erreicht das Shuttle den Lagerkanal, so kann die Steuerungseinrichtung dem Shuttle den Lagerplatz, auf dem das Fördergut eingelagert werden soll, mitteilen. Hierbei handelt es sich also um eine zentral gesteuerte Variante.

Alternativ kann ein der Steuerungseinrichtung untergeordnetes Routing-System vorhanden sein, welches das Shuttle vorzugsweise bis zum Kanal-Eingang führt. Nachdem das Shuttle den Kanal-Eingang erreicht hat, kann beispielsweise das Routing-System bei der Steuerungseinrichtung einen freien Lagerplatz innerhalb dieses Lagerkanals anfragen und/oder von der Steuerungseinrichtung eine Mitteilung über einen solchen freien Lagerplatz erhalten. Dem Shuttle wird dann der Lagerplatz, auf dem das Fördergut eingelagert werden soll, durch das Routingsystem, und somit dezentral mitgeteilt.

Unabhängig davon, ob der dezentrale oder der zentrale Ansatz gewählt wird, kann es sich bei dem Lagerplatz, welcher dem Shuttle als Ort für die Einlagerung mitgeteilt wird, üblicherweise um den am weitesten von dem Kanal-Eingang entfernten freien Lagerplatz handeln. Dies gilt jedenfalls, wenn der Lagerkanal als Sackgasse mit nur einem Kanal-Eingang ausgebildet ist. Auf diese Weise werden freie Lagerplätze zwischen belegten Lagerplätzen innerhalb eines Kanals vermieden. Weiterhin wird eine Blockade-Situation verhindert, weil bei der Ankunft eines Shuttles am Kanal-Eingang feststeht, welcher Lagerplatz frei ist, so dass die geplante Einlagerung durchgeführt kann.

Ebenfalls unabhängig davon, ob der dezentrale oder der zentrale Ansatz gewählt wird, kann auch das Shuttle bei irgendeinem übergeordneten System, beispielsweise bei der Steuerungseinrichtung, einen freien Lagerplatz innerhalb dieses Lagerkanals anfragen. Der Mitteilung des Lagerplatzes im Rahmen einer Spezifizierung des Auftrags kann also in allen Ausführungsformen eine entsprechende Anfrage des Shuttles vorausgehen.

Nach der Spezifizierung des Lagerplatzes, welche wie vorstehend beschrieben beispielsweise zentral oder dezentral erfolgen kann, lagert das Shuttle das Fördergut vorzugsweise auf diesem Lagerplatz ein.

Gemäss einer Ausführungsform des zweiten Verfahrens kann daran gedacht sein, das zweite Verfahren für sämtliche Shuttles eines Shuttle-Systems oder für sämtliche Shuttles einer Ebene oder für eine andere Teilmenge aller Shuttles eines Shuttle-Systems anzuwenden. Das zweite Verfahren muss also nicht zwingend für sämtliche Shuttles eines Shuttles-Systems angewandt werden.

Ferner kann auch daran gedacht sein, das zweite Verfahren nur dann anzuwenden, wenn ein zweiter Auftrag für einen Lagerkanal delegiert bzw. vergeben wurde, für den bereits ein offener Auftrag vorliegt. Zusätzlich könnte in einer solchen Ausführungsform der bereits offene Auftrag für diesen Lagerkanal nachträglich so modifiziert werden, dass auch er nur noch den Lagerkanal, aber nicht mehr den Lagerplatz spezifiziert, bis das Shuttle am Kanal-Eingang ankommt.

Obwohl beim zweiten Verfahren, genauso wie bei dem nachstehend geschilderten dritten Verfahren, der Lagerplatz bei Auftragsvergabe noch nicht spezifiziert ist, so wird, beispielsweise durch die Steuerungseinrichtung, vor Auftragsvergabe geprüft, ob im betreffenden Lagerkanal ein freier Lagerplatz vorliegt. Dies gehört zu den grundlegenden Aufgaben einer Steuerungseinrichtung und wird vorzugsweise sowohl beim zweiten als auch bei allen anderen Verfahren gemäss der vorliegenden Erfindung praktiziert.

Im Rahmen zweiten Verfahrens kann es vorkommen, dass mehrere Aufträge betreffend denselben Lagerkanal zeitgleich von verschiedenen Shuttles durchgeführt werden. Treffen in solch einem Fall die Shuttles nicht in der geplanten Reihenfolge am Lagerkanal ein, so kann es insbesondere zu einer Blockade-Situation kommen, welche wie vorstehend beschrieben mit dem zweiten Verfahren behoben werden kann. Auch in Situationen, in welchen das zweite Verfahren durchgeführt wird, um eine Blockade-Situation zu verhindern, werden in der Regel jeweils nur maximal so viele Einlager-Aufträge für den Lagerkanal vergeben, wie dieser Lagerplätze aufweist. Vorzugsweise ist der Lagerkanal also zu keinem Zeitpunkt überbelegt.

Sollte eine solche Überbelegung, beispielsweise fehlerbedingt, dennoch vorkommen, so kann im Rahmen des zweiten Verfahrens daran gedacht sein, dass der Auftrag nicht nur hinsichtlich des Lagerplatzes, sondern auch hinsichtlich des Lagerkanals spezifiziert wird. Es kann also daran gedacht sein, das Shuttle in solch einem Fall an einen anderen Kanal zu verweisen.

Gemäss einem **dritten Verfahren** werden zur Erhöhung der Lagerdichte und/oder zur Verhinderung von Blockade-Situationen folgende Schritte durchgeführt:
- Ein Shuttle erhält einen Auftrag zum Einlagern eines Förderguts, wobei dieser Auftrag den anzusteuernden Lagerkanal, nicht aber den Lagerplatz spezifiziert
- Das Shuttle fährt in den Lagerkanal ein und bewegt sich anschliessend innerhalb des Lagerkanals fort
- Während dieses Fortbewegens wird mittels eines Sensors überprüft, ob die vor dem Shuttle liegenden Lagerplätze frei oder belegt sind,
- Erkennt der Sensor einen belegten Lagerplatz, so wird das Fördergut auf dem unmittelbar an den belegten Lagerplatz angrenzenden freien Lagerplatz eingelagert
- Erkennt der Sensor keinen belegten Lagerplatz, so wird das Fördergut im Falle eines als Sackgasse ausgebildeten Lagerkanals auf dem in einer Einfahrt-Richtung letzten Lagerplatz innerhalb des Lagerkanals eingelagert; im Falle eines Lagerkanals mit zwei Kanal-Eingängen wird das Fördergut auf einem in der Mitte des Lagerkanals befindlichen Lagerplatz oder auf dem in Einfahrt-Richtung letzten Lagerplatz eingelagert.

Ob das Fördergut in einem Lagerkanal mit zwei Kanal-Eingängen mittig oder auf dem letzten Lagerplatz, d.h. unmittelbar vor dem gegenüberliegenden Kanal-Eingang abgestellt wird, kann beispielsweise von einer Lagerstrategie abhängen. Bekannte und hier zu beachtende Lagerstrategien sind beispielsweise "first in first out" (FIFO) oder "last in first out" (LIFO); das zuerst auszulagernde Fördergut kann also das zuerst oder zuletzt eingelagerte Fördergut sein.

Nachdem es den Auftrag erhalten hat und bevor es in den Lagerkanal einfährt, kann sich das Shuttle durch das Regal zu dem Lagerkanal bewegen.

Das Fortbewegen innerhalb des Lagerkanals erfolgt vorzugsweise in Einfahrt-Richtung.

Gemäss einer Ausführungsform des dritten Verfahrens fährt das Shuttle also vorzugsweise in den Lagerkanal ein, ohne den Lagerplatz zu "kennen". Ein Sensor, welcher am Shuttle angebracht sein kann, kann während dieses Einfahrens überprüfen, ob die vor dem Shuttle liegenden Lagerplätze frei oder belegt sind, also ob dort bereits Fördergüter eingelagert sind, oder nicht.

Hierbei kann an beliebige geeignete Sensoren gedacht sein. Da gängige Shuttle-Systeme derartige Sensoren meist als Bordmittel der Shuttles vorsehen, kann das dritte Verfahren ohne hardwareseitige Umrüstung in bestehenden Shuttle-Systemen implementiert werden.

Das Shuttle kann einen einzigen oder mehrerer derartiger Sensoren umfassen.

Wird ein durch ein Fördergut belegter Lagerplatz erkannt, so stellt das Shuttle das einzulagernde Fördergut vorzugsweise auf dem letzten freien Lagerplatz in Einfahrt-Richtung ab. Wie vorstehend bereits beschrieben kann bei einem nicht als Sackgasse ausgebildeten Lagerkanal auch daran gedacht sein, das Fördergut etwa mittig abzustellen, was von der Lagerstrategie abhängen kann.

Gemäss einer Ausführungsform des dritten Verfahrens ist das Shuttle eingerichtet, seine Position innerhalb des Lagerkanals zu erfassen oder zu berechnen, und nach erfolgreicher Einlagerung der Steuerungseinrichtung die Position des eingelagerten Förderguts mitzuteilen. Ein Erfassen oder Berechnen der Position kann beispielsweise mit Hilfe eines geeigneten Gebers im Shuttle, durch Erfassen eines Rasters oder einer andersartigen Markierung auf einem Boden des Lagerkanals oder durch eine Distanzmessung zu einem bekannten Punkt oder einer bekannten Fläche innerhalb des Lagerkanals erfolgen. Weiterhin können innerhalb einer Schiene in dem Lagerkanal, auf der sich das Shuttle im Lagerkanal fortbewegt, in regelmässigen Abständen Löcher angeordnet sein, welche von einem Sensor erfasst und gezählt werden, so dass unmittelbar auf einen Fahrweg im Lagerkanal und somit auf die Position geschlossen werden kann.

Nach dem Einlagern verlässt das Shuttle den Lagerkanal vorzugsweise wieder.

Gemäss einer Ausführungsform des dritten Verfahrens kann daran gedacht sein, das dritte Verfahren für sämtliche Shuttles eines Shuttle-Systems oder für sämtliche Shuttles einer Ebene oder für eine andere Teilmenge aller Shuttles eines Shuttle-Systems anzuwenden. Das dritte Verfahren muss also nicht zwingend für sämtliche Shuttles eines Shuttles-Systems angewandt werden.

Ferner kann auch daran gedacht sein, das dritte Verfahren nur dann anzuwenden, wenn ein zweiter Auftrag für einen Lagerkanal delegiert bzw. vergeben wurde, für den bereits ein offener Auftrag vorliegt. Zusätzlich könnte in einer solchen Ausführungsform der bereits offene Auftrag für diesen Lagerkanal nachträglich so modifiziert werden, dass auch er nur noch den Lagerkanal, aber nicht mehr den Lagerplatz spezifiziert, bis das Shuttle am Kanal-Eingang ankommt.

Im Rahmen des dritten oder des zweiten Verfahrens kann zu irgendeinem Zeitpunkt vor der Ankunft desjenigen Shuttles am Kanal-Eingang oder am Lagerkanal, dessen Lagerplatz im Auftrag nicht spezifiziert wurde, festgestellt werden, dass ein anderes Shuttle einen Auftrag zum Auslagern eines Förderguts in demselben Kanal erhalten hat. Wenn dieser Auslager-Auftrag durchgeführt werden soll, bevor das Shuttle, dessen Lagerplatz im Auftrag nicht spezifiziert wurde, seinen Auftrag ausführen soll, so kann daran gedacht sein, das letztgenannte Shuttle während seiner Fahrt zum Lagerkanal derart stoppt oder verlangsamt, dass das Shuttle mit dem Auslager-Auftrag zuerst dort ankommt.

Kommt es im Rahmen des dritten Verfahrens, beispielsweise fehlerbedingt, zu einer Überbelegung des Lagerkanals, so kann in analoger Weise verfahren werden, wie zum zweiten Verfahren bereits beschrieben. Wenn mittels des Sensors oder der Sensoren festgestellt wird, dass alle Lagerplätze des Lagerkanals belegt sind, kann das Shuttle an einen anderen Lagerkanal verwiesen werden. Hierfür kann das Shuttle, an welchem der Sensor vorzugsweise angebracht ist, eine entsprechende Meldung an die Steuerungseinrichtung senden, die dann als Rückmeldung den alternativen Lagerkanal zuweist.

Ist der Lagerkanal nicht als Sackgasse ausgebildet, so kann daran gedacht sein, dass zwei Shuttles erkennen, wenn sie gleichzeitig von gegenüberliegenden Kanal-Eingängen in denselben Lagerkanal einfahren, um dort ihr Fördergut einzulagern. Hierzu können Bordmittel der Shuttles, insbesondere zumindest ein entsprechender Sensor, verwendet werden. Erkennen die Shuttles die vorbeschriebene Situation, so kann daran gedacht sein, dass eines der Shuttles stehen bleibt, und das andere sein Fördergut auf einem mittig gelegenen Lagerlatz einlagert. Anschliessend kann das zuvor wartende Shuttle sein Fördergut unmittelbar angrenzend an das soeben eingelagerte Fördergut einlagern.

Gemäss einem **vierten Verfahren** werden zur Erhöhung der Lagerdichte und/oder zur Verhinderung von Blockade-Situationen folgende Schritte durchgeführt:
a1. Liegen zumindest zwei aktive oder offene Aufträge zum Ein-, Aus- oder Umlagern für einen Lagerkanal vor, so ordnet die Steuerungseinrichtung zumindest einen ersten und einen zweiten aktiven oder offenen Auftrag in einer Reihenfolge an.
b1. Die Steuerungseinrichtung berechnet für einen ersten aktiven oder offenen Auftrag (nachfolgend erster Auftrag) einen zu erwartenden Endzeitpunkt einer Auftragslaufzeit oder einen Zeitpunkt, an welchem ein diesen ersten Auftrag durchführendes Shuttle voraussichtlich am Kanal-Eingang eintrifft.
b2. Die Steuerungseinrichtung berechnet für einen zweiten aktiven oder offenen Auftrag (nachfolgend zweiter Auftrag) einen zu erwartenden Endzeitpunkt einer Auftragslaufzeit oder einen Zeitpunkt, an welchem ein diesen zweiten Auftrag durchführendes Shuttle voraussichtlich am Kanal-Eingang eintrifft,
c1. Die Steuerungseinrichtung vergleicht die für beide Aufträge gemäss den Schritten b1 und b2 berechneten Zeitpunkte.
d1. Falls der gemäss Schritt b2 berechnete Zeitpunkt für den zweiten Auftrag vor dem gemäss Schritt b1 berechneten Zeitpunkt für den ersten Auftrag liegt, modifiziert die Steuerungseinrichtung den ersten Auftrag und/oder den zweiten Auftrag.

Das vierte Verfahren umfasst somit die Schritte a1, b1, b2, c1 und d1, welche vorzugsweise in dieser Reihenfolge durchgeführt werden.

Für das Umlagern können im Rahmen des vierten Verfahrens dieselben Überlegungen gelten wie für das Auslagern, da der erste Schritt des Umlagerns meist in einem Auslagern des umzulagernden Förderguts besteht, welches dann an anderer Stelle wieder eingelagert wird.

Im Rahmen des vierten Verfahrens wird also vorzugsweise zu einem beliebigen Zeitpunkt vor oder nach Auftragsvergabe überprüft, ob die angedachte Reihenfolgen voraussichtlich eingehalten wird. Sollte dies nicht der Fall sein, so erfolgt ein Eingriff im Rahmen der Modifikation gemäss Schritt d1. Dies kann ein einziges Mal, gegebenenfalls aber auch mehrfach oder in regelmässigen Intervallen geschehen.

Das den ersten Auftrag durchführende Shuttle wird nachfolgend "erstes Shuttle" genannt. Das den zweiten Auftrag durchführende Shuttle wird nachfolgend "zweites Shuttle" genannt. Hierbei beziehen sich die Bezeichnungen der Shuttles lediglich auf die gemäss den Schritten a1, b1 und b2 in einen ersten und einen zweiten Auftrag untergliederten Aufträge. Das zweite Shuttle ist also nicht stets dasjenige Shuttle, welches auch tatsächlich als zweites, d.h. nach dem ersten Shuttle, am Lagerkanal ankommt.

Gemäss einem bevorzugten Ausführungsbeispiel wird das vierte Verfahren auf genau zwei aktive oder offene Aufträge angewandt, auch wenn mehr als zwei offene oder aktive Aufträge vorliegen und somit zur Verfügung stehen.

Bei allen zumindest zwei Aufträgen kann es sich entweder um aktive oder um offene Aufträge handeln. Es kann auch beispielsweise daran gedacht sein, dass der erste Auftrag ein offener Auftrag ist und der zweite Auftrag ein aktiver Auftrag oder andersherum. Ist zumindest einer der Aufträge ein aktiver Auftrag, so kann eine Vergabe dieses Auftrags, aus dem dann ein offener Auftrag wird, zu einem beliebigen Zeitpunkt, insbesondere vor oder nach jedem der Schritte des vierten Verfahrens erfolgen. Handelt es sich bei den zumindest zwei Aufträgen um aktive Aufträge, so werden die gemäss dem vierten Verfahren in eine Reihenfolge gebrachten und nötigenfalls modifizierten Aufträge anschliessend delegiert, d.h. an zumindest zwei Shuttles vergeben.

Die Aufträge gemäss Schritt a1 betreffen vorzugsweise denselben Lagerkanal.

Hierbei können die Aufträge derart beschaffen sein, dass beide den Lagerkanal und den Lagerplatz in diesem Lagerkanal zur Durchführung der jeweiligen Lageroperation spezifizieren. Alternativ kann nur für einen der beiden Aufträge der Lagerplatz spezifiziert sein, während für den anderen Auftrag lediglich der Lagerkanal feststeht.

Das vierte Verfahren ist auf mehrfachtiefe Lagerkanäle anwendbar. Abhängig von beiden Aufträgen, d.h. von beiden durchzuführenden Lageroperationen, kann das vierte Verfahren auch auf einfachtiefe Lagerkanäle angewandt werden.

Das vierte Verfahren führt vorzugsweise dazu, die Lagerdichte im betreffenden Lagerkanal zu erhöhen und Blockaden zu verhindern. Es kann jedoch auch an Ausführungsbeispiele gedacht sein, in denen nur eine dieser Wirkungen erreicht wird.

Die Reihenfolge in Schritt a1 ist vorzugsweise so gewählt, dass die Lagerdichte im betreffenden Lagerkanal möglichst hoch ist, wenn die Aufträge in der Reihenfolge abgearbeitet werden. Die Reihenfolge der Aufträge ist hierbei vorzugsweise so gewählt, dass zwischen zwei belegten Lagerplätzen im Lagerkanal kein unbelegter Lagerplatz verbleibt, nachdem die Aufträge in der Reihenfolge abgearbeitet wurden.

Schritt a1 kann gemäss einem Ausführungsbeispiel jedoch auch allein darin bestehen, die zwei Aufträge mit einem Identifikator, beispielsweise einer Nummer oder dergleichen, zu versehen, so dass sie unterscheidbar sind.

Der zu erwartende Endzeitpunkt einer Auftragslaufzeit gemäss den Schritten b1 und b2 kann beispielsweise der Zeitpunkt sein, zu dem das Shuttle den Lagerkanal voraussichtlich verlässt. Der zu erwartende Endzeitpunkt kann auch der Zeitpunkt sein, zu welchem das Shuttle seine Lageroperation, also beispielsweise ein- oder Auslagern des Förderguts im Lagerkanal, durchgeführt hat oder mit dessen Durchführung beginnt. Ein bevorzugter und im Rahmen der Berechnung robuster Endzeitpunkt ist der Zeitpunkt, zu dem das Shuttle den Lagerkanal voraussichtlich verlässt.

Einem Ausführungsbeispiel gemäss können die Zeitpunkte gemäss den Schritten b1 und b2 jeweils der Zeitpunkt sein, an welchem das jeweilige Shuttle voraussichtlich am Kanal-Eingang eintrifft. Ein Vergleich dieser Zeitpunkt kann geeignet sein, mit ausreichender Wahrscheinlichkeit Blockade-Situationen und zu niedrige Lagerdichten zu vermeiden.

Einem alternativen Ausführungsbeispiel gemäss kann der Zeitpunkt gemäss Schritt b1 der End-Zeitpunkt sein, an welchem das erste Shuttle den Lagerkanal voraussichtlich verlässt. Der Zeitpunkt gemäss Schritt b2 kann der zu erwartende Zeitpunkt sein, an welchem das zweite Shuttle am Kanal-Eingang eintrifft. Ein Vergleich der vorgenannten Zeitpunkte kann geeignet sein, Blockade-Situationen und zu niedrige Lagerdichten besonders robust und zuverlässig zu vermeiden.

Die Modifikation gemäss Schritt d1 kann auf unterschiedliche Weise erfolgen.

Im Rahmen einer **ersten Modifikation** daran gedacht sein, die Auftragslaufzeiten in verschiedenster Weise wie nachstehend beschrieben zu verlängern oder zu verkürzen, so dass die Shuttles in der Reihenfolge gemäss Schritt a1 den Lagerkanal erreichen.

Es im Rahmen der ersten Modifikation kann daran gedacht sein, den zweiten Auftrag derart zu modifizieren, dass der in Schritt b2 genannte Zeitpunkt nach dem in Schritt b1 genannten Zeitpunkt liegt. Hierzu kann beispielsweise die Fahrzeit des zweiten Shuttles verlängert werden, so dass dieses später am Kanal-Eingang eintrifft. Beispielsweise kann eine Geschwindigkeit des zweiten Shuttles verringert werden. Alternativ kann das zweite Shuttle während seiner Fahrt zum Kanal-Eingang für einen bestimmten Zeitraum gestoppt werden; wobei ein Stoppen zum Aufladen des Energiespeichers angedacht sein kann. Das Stoppen und die Verringerung der Geschwindigkeit kann auch im Sinne einer indirekten Modifikation des zweiten Auftrags erfolgen, indem beispielsweise das zweite Shuttle tangierende Vorfahrtsregeln so geändert werden, dass es auf seiner Fahrt zum Lagerkanal zumindest einmal verlangsamt oder gestoppt wird. Wurde der zweite Auftrag noch nicht delegiert, und handelt es sich also um einen aktiven und nicht um einen offenen Auftrag, so kann der zweite Auftrag so spät delegiert, d.h. in einen offenen Auftrag umgewandelt werden, dass der in Schritt b2 genannte Zeitpunkt nach dem in Schritt b1 genannten Zeitpunkt liegt.

Wie vorstehend beschrieben kann die Modifikation des zweiten Auftrags direkt oder indirekt erfolgen. Eine direkte Modifikation kann bevorzugt sein.

Alternativ oder zusätzlich kann im Rahmen der ersten Modifikation daran gedacht sein, den ersten Auftrag direkt oder indirekt zu modifizieren, so dass der in Schritt b2 genannte Zeitpunkt nach dem in Schritt b1 genannten Zeitpunkt liegt. Im Rahmen einer indirekten Modifikation des ersten Auftrags kann daran gedacht sein, die Vorfahrtsregeln so zu ändern, dass das erste Shuttle nicht oder seltener verzögert und/oder abgebremst wird, während es zum Lagerkanal fährt.

Im Rahmen einer direkten Modifikation kann beispielsweise eine Geschwindigkeit des ersten Shuttles erhöht werden. Ausserdem kann zumindest ein eingeplanter Halt des ersten Shuttles entfallen. Ferner kann der erste Auftrag früher als ursprünglich geplant an das erste Shuttle delegiert werden, falls dies nicht schon erfolgt ist.

Bei den vorbeschriebenen Modifikationen, welche dazu führen, dass der in Schritt b2 genannte Zeitpunkt nach dem in Schritt b1 genannten Zeitpunkt liegt, können zusätzlich so ausgeführt werden, dass zwischen den beiden vorgenannten Zeitpunkten ein vorbestimmter minimaler Zeitraum, also ein zeitlicher Mindest-Abstand, liegt. Dieser kann im Bereich von einer oder mehreren Sekunden, beispielsweise von 5 Sekunden, 10 Sekunden, 20 Sekunden, oder 30 Sekunden; bis hin zu einem Zeitraum von ungefähr einer Minute oder darüber liegen. Die Länge des Mindest-Abstands kann von zahlreichen Faktoren abhängig sein, beispielsweise der Anzahl der Shuttles im Regal, der Häufigkeit von Blockade-Situationen in der Vergangenheit oder einer modellierten zu erwartenden Häufigkeit von Blockade-Situationen im Shuttle-System oder dergleichen.

Im Rahmen einer **zweiten Modifikation** des ersten und des zweiten Auftrags kann daran gedacht sein, dass die Aufträge vertauscht werden, so dass das erste Shuttle nach dem Tausch den zweiten Auftrag durchführt und umgekehrt. Ein solcher Tausch ist insbesondere denkbar, wenn die gemäss den beiden Aufträgen durchzuführenden Lageroperationen identisch sind, es sich also bei beiden Aufträgen entweder um Auslagervorgänge oder um Einlager-Vorgänge handelt.

Die Aufträge werden gemäss der vorstehend geschilderten Modifikation dann in umgekehrter Reihenfolge abgearbeitet, d.h. die zugehörigen Lageroperationen im Lagerkanal erfolgen auch in umgekehrter Reihenfolge. Gemäss einem Ausführungsbeispiel kann daran gedacht sein, dass nach Durchführung des vorbeschriebenen Tauschs zumindest einer der Aufträge nochmals modifiziert wird, so dass ein zeitlicher Mindest-Abstand zwischen den Zeitpunkten gemäss den Schritten b1 und b2 liegt. Dies kann in der vorstehend bereits beschriebenen Weise erfolgen.

Eine **dritte Modifikation** des ersten und/oder des zweiten Auftrags kann darin bestehen, dass zumindest einer der vorgenannten Aufträge derart modifiziert wird, dass dem zugehörigen Shuttle ein alternativer Lagerplatz, gegebenenfalls in einem anderen Lagerkanal, zugewiesen wird. Vorzugsweise wird nur einer der Aufträge auf diese Weise modifiziert. Vorzugsweise kommt diese Modifikation für Aufträge umfassend die Lageroperation "Einlagern" zum Einsatz.

Bei einem Ausführungsbeispiel des vierten Verfahrens kommt vorzugsweise zumindest eine der vorstehend geschilderten Modifikationen, d.h. die erste, die zweite oder die dritte Modifikation zum Einsatz. Von der vorliegenden Erfindung ist also auch ein viertes Verfahren umfasst, bei welchem nur eine oder nur zwei der drei vorstehend geschilderten Modifikationen zur Verfügung stehen.

Stehen gemäss einer Ausführungsform des vierten Verfahrens zumindest zwei der drei vorstehend geschilderten Modifikationen zur Verfügung, so kann daran gedacht sein, dass eine Auswahl der im Rahmen von Schritt d1 durchzuführenden Modifikation in der nachfolgend beschriebenen Weise geschieht.

Zunächst kann daran gedacht sein, die durchzuführende Modifikation von den auftragsgemäss durchzuführenden Lageroperationen abhängig zu machen oder zumindest in Bezug auf diese Lageroperationen einzugrenzen:
Die vorbeschriebenen Varianten der ersten Modifikation, also eine Anpassung der Auftragslaufzeiten, kann unabhängig davon angewandt werden, ob es sich bei beiden Aufträgen um dieselbe Lageroperation handelt.. Die Varianten der zweiten Modifikation, also ein Auftrags-Tausch, kann in der Regel nur erfolgen, wenn beide Aufträge dieselbe Lageroperation, also entweder jeweils ein Einlagern oder jeweils ein Auslagern vorschreiben. Die dritte Modifikation, also die Zuweisung eines alternativen Lagerplatzes, kann in der Regel in Bezug auf Aufträge erfolgen, welche ein Einlagern vorschreiben, sofern das einzulagernde Fördergut nicht von dem anderen Shuttle durch anschliessendes Auslagern übernommen werden muss.

Es kann daran gedacht sein, die Modifikation allein von den auftragsgemäss durchzuführenden Lageroperationen abhängig zu machen. So kann beispielsweise daran gedacht sein, die zweite Modifikation stets durchzuführen, falls sie angesichts der auftragsgemäss durchzuführenden Lageroperationen möglich ist. Sollte dies nicht der Fall sein, kann daran gedacht sein, auf die dritte Modifikation oder auf die erste Modifikation auszuweichen, wobei hier wiederum die dritte Modifikation bevorzugt durchgeführt werden kann.

Weiterhin kann angedacht sein, die Modifikation nicht allein von den auftragsgemäss durchzuführenden Lageroperationen abhängig zu machen. Stattdessen kann abhängig von den durchzuführenden Lageroperationen lediglich eine Auswahl der zur Verfügung stehenden Modifikationen getroffen werden. Stehen für eine gegebene Kombination auftragsgemässer Lageroperationen mehrere Modifikationen zur Verfügung, so kann daran gedacht sein, die erste Modifikation immer dann durchzuführen, wenn der zeitliche Abstand zwischen den Zeitpunkten gemäss den Schritten b1 und b2 unterhalb einer maximalen Länge liegt. Somit erfolgen nur minimale Eingriffe in die Aufträge, und es werden gleichzeitig längere Verzögerungs- oder StillstandsZeiten vermieden. Ferner kann daran gedacht sein, die erste Modifikation mit einem Stillstand zum Aufladen des Energiespeichers immer dann zu wählen, wenn sich der Energiespeicher des betreffenden Shuttles unterhalb eines vorgegebenen Lade- oder Füllzustands befindet.

Liegt hingegen der zeitliche Abstand zwischen den Zeitpunkten gemäss den Schritten b1 und b2 oberhalb einer maximalen Länge, so kann daran gedacht sein, beispielsweise die zweite oder dritte Modifikation anstelle der ersten Modifikation durchzuführen. Insbesondere die dritte Modifikation kann einem Ausführungsbeispiel gemäss erst dann zum Einsatz kommen, wenn der zeitliche Abstand zwischen den Zeitpunkten gemäss den Schritten b1 und b2 oberhalb einer maximalen Länge liegt, da die dritte Modifikation einen deutlichen Eingriff in eine Betriebsdynamik des Lagers darstellt. Dies gilt ganz besonders, wenn dem betreffenden Shuttle im Rahmen der dritten Modifikation ein alternativer Lagerplatz in einem alternativen Lagerkanal zugewiesen wird.

Zusätzlich zum Schritt d1 kann das vierte Verfahren folgenden Schritt d2 umfassen:
d2. Falls der gemäss Schritt b2 berechnete Zeitpunkt für den zweiten Auftrag nach dem gemäss Schritt b1 berechneten Zeitpunkt für den ersten Auftrag liegt, und falls ein Zeitraum zwischen den vorgenannten Zeitpunkten eine vorgegebene Mindest-Länge unterschreitet, modifiziert die Steuerungseinrichtung den ersten und/oder den zweiten Auftrag. Diese Modifikation erfolgt vorzugsweise so, wie vorstehend für die erste Modifikation in Bezug auf Schritt d1 beschrieben.

Während der von der Steuerungseinrichtung durchzuführenden Berechnung der zu erwartenden Zeitpunkte müssen die Aufträge noch nicht delegiert sein. Die Steuerungseinrichtung kann in diesem Schritt jedoch beispielsweise bereits wartende oder sich im Lager bewegende, aber keinen offenen Auftrag ausführende Shuttles aussuchen, und unter Berücksichtigung ihrer Position und der daraus resultierenden Fahrtzeit die zu erwartenden Zeitpunkte berechnen. In gleicher Weise könnte die Steuerungseinrichtung auch sich im Lager bewegende Shuttles für die Berechnung heranziehen, welche momentan einen offenen Auftrag ausführen, sofern bei der Berechnung die restliche Dauer dieser offenen Aufträge berücksichtigt wird.

Die Schritte des vierten Verfahrens werden vorzugsweise dann durchgeführt, wenn mehrere aktive Aufträge, also beispielsweise Aufträge zum Ein-, Aus-oder Umlagern eines Förderguts, betreffend einen einzigen, d.h. denselben Lagerkanal vorliegen.

Gemäss einem Ausführungsbeispiel des vierten Verfahrens wird der Zeitraum verlängert, wenn festgestellt wurde, dass seine Länge unterhalb der minimalen Länge liegt.

**Die vorliegende Erfindung umfasst neben den vorbeschriebenen Verfahren ein Shuttle-System umfassend eine Steuerungseinrichtung,** wobei das Shuttle-System ein Regal mit einem Fahrweg und einem vorzugsweise mehrfachtiefen Lagerkanal mit zumindest zwei Lagerplätzen umfasst, wobei das Shuttle-System weiterhin zumindest zwei Shuttles umfasst, wobei die Shuttles eingerichtet sind, Fördergüter ein-, aus- oder umzulagern, wobei die Shuttles Aufträge zum Ein-, Aus- oder Umlagern eines Förderguts von der Steuerungseinrichtung erhalten, wobei die Steuerungseinrichtung zum Verhindern einer Blockade-Situation und zur Erhöhung einer Lagerdichte eingerichtet ist, die Verfahrensschritte gemäss zumindest einem der vorbeschriebenen Verfahren, insbesondere gemäss dem ersten, dem zweiten, dem dritten oder dem vierten erfindungsgemässen Verfahren durchzuführen.

Merkmale und Details, welche vorstehend im Hinblick auf die erfindungsgemässen Verfahren beschrieben wurden, gelten anlog auch für das erfindungsgemässe Shuttle-System.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in den Figuren 1 bis 3 Ausschnitte eines Shuttle-Systems zur Durchführung der erfindungsgemässen Verfahren und in den Figuren 4 bis 7 Flussdiagramme von Ausführungsbeispielen der vier erfindungsgemässen Verfahren. Die Figuren 8 und 9 veranschaulichen Einzelheiten zu Ausführungsformen des vierten Verfahrens gemäss der vorliegenden Erfindung.

### Ausführungsbeispiel

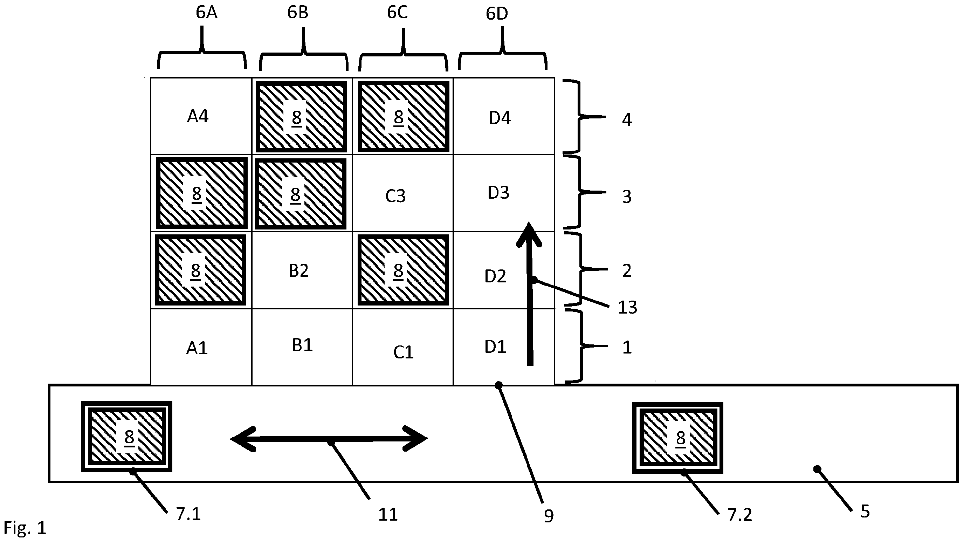

In den Figuren 1 bis 3 ist jeweils ein Ausschnitt eines an sich bekannten Shuttle-Systems dargestellt.

Der Fahrweg 5 und zwei darauf befindliche Shuttles 7.1, 7.2 sind erkennbar, ebenso wie mehrere Fördergüter 8 auf einigen der gezeigten Shuttles 7.1, 7.2. Im Wesentlichen orthogonal zu einer Fahrtrichtung 11 der Shuttles 7.1, 7.2 auf dem Fahrweg 5 verlaufen Lagerkanäle 6A, 6B, 6C, 6D mit jeweils vier Lagerplätzen D1, ..., D4; C1, ..., C4; B1, ..., B4; A1, ...,A4. Die Lagerplätze A1, B1, C1 und D1 entsprechen der Lagertiefe 1, die Lagerplätze A2, B2, C2, D2 entsprechen der Lagertiefe 2, etc. Eine Einfahrt-Richtung 13 ist in Figur 1 angedeutet.

Zwischen den Lagerplätzen A1, ..., D1 der Lagertiefe 1 und dem Fahrweg 5 liegen Kanal-Eingänge 9, wobei der besseren Übersicht halber nur der Kanal-Eingang 9 des Lagerkanals 6D mit einer Bezugsziffer versehen ist.

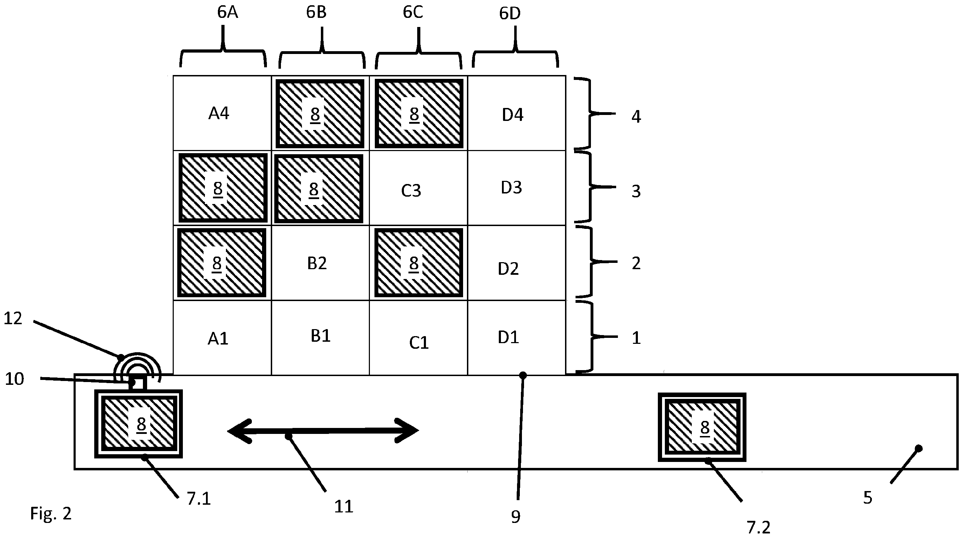

In Figur 2 ist das Shuttle 7.1 mit einem Sensor 10 versehen, welcher in Bezug auf das dritte Verfahren näher erläutert wird und mit angedeuteten Wellen 12 dargestellt ist.

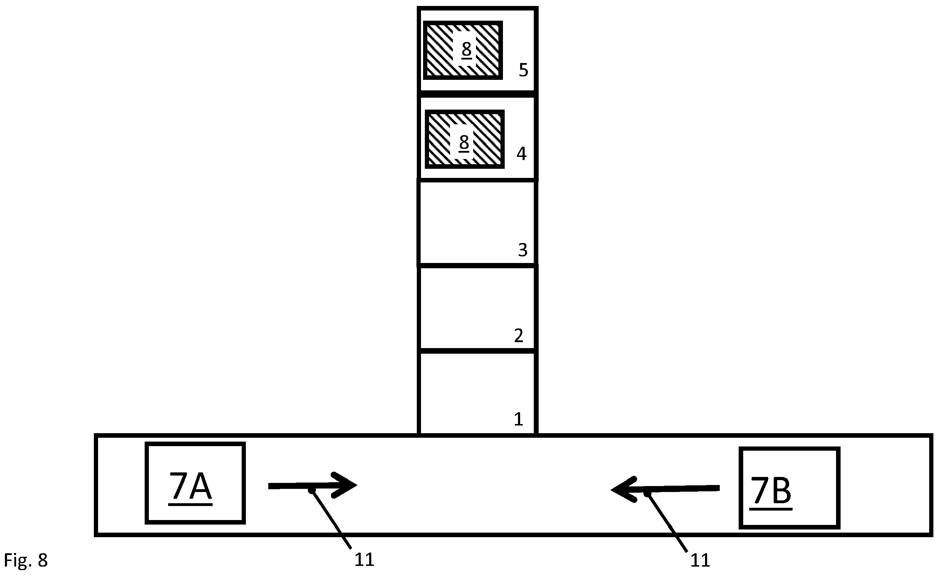

Figur 8 zeigt eine schematische Darstellung eines Lagerkanals mit fünf Lagerplätzen sowie zwei Shuttles 7A, 7B, welche diesen Lagerkanal ansteuern.

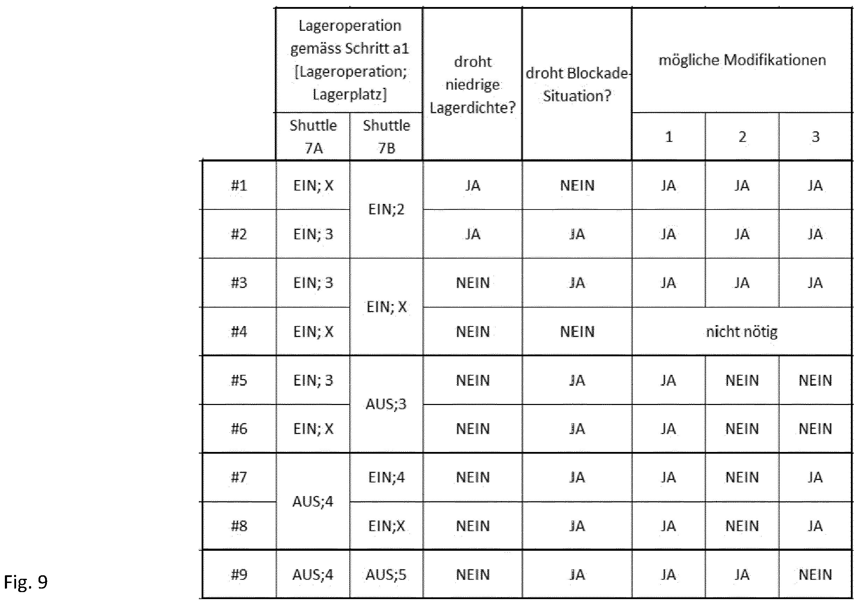

Figur 9 zeigt eine Matrix, welche in Zusammenschau mit Figur 8 mögliche drohende Probleme sowie die Lösungen darstellt, welche die drei möglichen Modifikationen der Aufträge gemäss Ausführungsvarianten des vierten Verfahrens bieten. Es sind 9 Fälle #1, ..., #9 dargestellt. Die Lageroperationen der Shuttles 7A und 7B aus Figur 8 werden hinsichtlich Art und Lagerplatz spezifiziert: "EIN;3" bedeutet beispielsweise, dass auftragsgemäss auf Lagerplatz 3 (gemäss Fig. 8) eingelagert werden soll.

Die Figuren 8 und 9 dienen dazu, ein Szenario zu betrachten, bei welchem die Shuttles 7A und 7B Aufträge für denselben Lagerkanal durchführen sollen, wobei auftragsgemäss das erste Shuttle 7A zuerst am Lagerkanal eintreffen sollte, dies aber beispielsweise störungs- oder verzögerungsbedingt nicht tut. Stattdessen trifft das zweite Shuttle 7B, welches eigentlich nach dem ersten Shuttle 7A am Lagerkanal eintreffen sollte, zuerst dort ein.

Drohende zu niedrige Lagerdichten oder Blockade-Situationen werden also für den Fall betrachtet, dass die Shuttles 7B und 7A ihre Lageraufträge in der Reihenfolge durchführen oder durchzuführen versuchen, in welcher sie am Lagerkanal eintreffen.

Die erste Modifikation ist mit "1" bezeichnet, die zweite Modifikation mit "2" und die dritte mit "3".

Bezugnehmend auf die Figuren 1 bis 9 erklärt sich die Funktionsweise der erfindungsgemässen Vorrichtung folgendermassen:
Die Shuttles 7.1, 7.2 fahren üblicherweise entlang einer Fahrtrichtung 11 auf den Fahrwegen 5. Über die Kanal-Eingänge 9 können die Shuttles 7.1, 7.2 orthogonal zur Fahrtrichtung 11 in die Lagerkanäle 6A, 6B, 6C, 6D einfahren. Diese sind üblicherweise derart baulich voneinander getrennt, dass beispielsweise ein in Lagertiefe 1 auf dem Lagerplatz D1 befindliches Shuttle 7.1, 7.2 nicht parallel zur Fahrtrichtung in den benachbarten Lagerplatz C1 wechseln kann.

Bei bekannten Verfahren zum Betreiben eines derartiges Shuttle-Systems konnte es in der den Figuren 1 und 2 dargestellten Konfiguration zu der Situation kommen, dass das Shuttle 7.1 einen Auftrag zum Einlagern für den Lagerplatz B1 und das Shuttle 7.2 einen Auftrag zum Einlagern für den Lagerplatz B2 hat. Wenn nun, wie in den Figuren 1 und 2 dargestellt, Shuttle 7.1 vor Shuttle 7.2 am Lagerkanal 6B ankommt und das geladene Fördergut 8 auf dem Lagerplatz B1 einlagert, so entsteht eine Blockade-Situation. Das später eintreffende Shuttle 7.2 kann das geladene Fördergut 8 nicht auf dem Lagerplatz B2 einlagern, weil es an der bereits auf dem Lagerplatz B1 abgeladenen Fördergut 8 des Shuttles 7.1 ohne eine Umlagerung nicht vorbeikommt.

Sämtliche Verfahren gemäss der vorliegenden Erfindung können die vorbeschriebene Blockade-Situation verhindern.

Wird das Shuttle-System gemäss dem ersten Verfahren betrieben, so ist eine Blockade-Situation grundsätzlich ausgeschlossen, da die Shuttles 7.1 und 7.2 niemals gleichzeitig mit Aufträgen betreffend denselben Lagerkanal 6B unterwegs wären.

Wird das Shuttle-System gemäss dem zweiten oder dritten Verfahren betrieben, so kann eine solche Blockade-Situation nicht vorkommen, da dem Shuttle 7.1 erst unmittelbar vor oder während seiner Einfahrt in den Lagerkanal 6B der freie Lagerplatz B2 mitgeteilt wird. Das zuerst am Lagerkanal 6B ankommende Shuttle würde gemäss diesen Verfahren also das Fördergut 8 nicht auf dem Lagerplatz B1 einlagern, sondern den am weitesten vom Fahrweg 5 entfernten freien Lagerplatz B2 innerhalb des Lagerkanals 6B zugewiesen bekommen oder mit Hilfe des Sensors 10 finden.

Wird das Shuttle-System gemäss dem vierten Verfahren betrieben, so hätte die Steuerungseinrichtung beispielsweise bereits im Vorfeld durch eine entsprechende Berechnung und notfalls die Zugabe eines Zeitpuffers entweder sichergestellt, dass das Shuttle 7.2 zuerst am Lagerkanal 6B ankommt, um das Fördergut auf dem Lagerplatz B2 einzulagern; oder es hätte dem Shuttle 7.1 den Lagerplatz B2 zugewiesen, falls abzusehen gewesen war, dass das Shuttle 7.1 zuerst am Lagerkanal 6B ankommt.

Auf dieselbe Weise verhindern die vier vorbeschriebenen Verfahren auch das Entstehen von leeren Lagerplätzen A4, C3. Wie eingangs erläutert, hätte es bei bekannten Verfahren vorkommen können, dass Shuttle 7.1 mit einem Auftrag zum Einlagern auf Lagerplatz B1 vor Shuttle 7.2 eintrifft, welches einen Auftrag zum Einlagern auf Lagerplatz B2 hat. Auch in dieser Situation wäre ein leerer Lagerplatz, nämlich B2, entstanden. Die vorbeschriebenen Verfahren gemäss der vorliegenden Erfindung verhindern diesen leeren Lagerplatz jedoch.

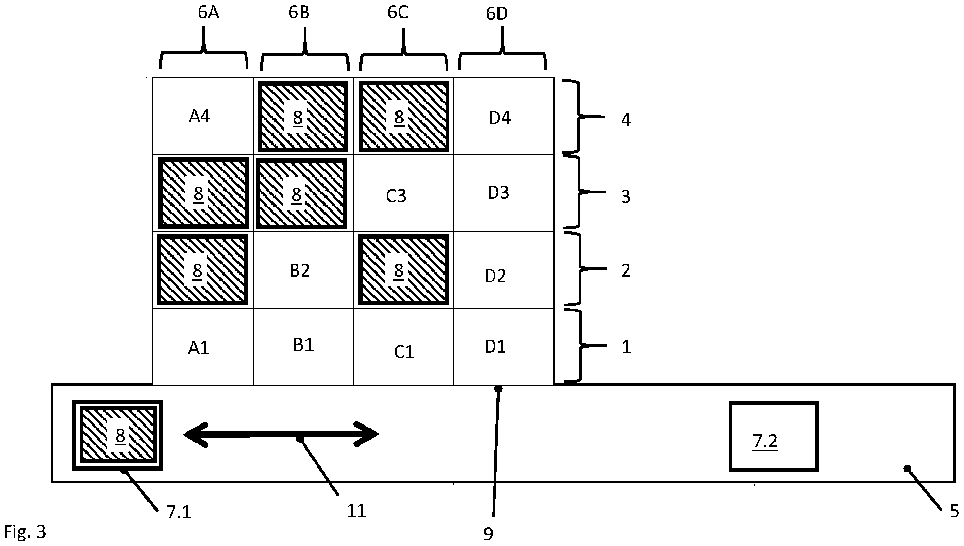

Bei bekannten Verfahren zum Betreiben eines derartiges Shuttle-Systems konnte es in der Figur 3 dargestellten Konfiguration zu der Situation kommen, dass Shuttle 7.1 einen Auftrag zum Einlagern auf einen der Lagerplätze B1 oder B2 hat, während der Auftrag des nicht beladenen Shuttles 7.2 darin besteht, das Fördergut 8 vom Lagerplatz B3 auszulagern. Wenn in dieser Situation, wie in Figur 3 angedeutet, Shuttle 7.1 zuerst am Lagerkanal 6B ankommt und seinen Auftrag ausführt, kann das später eintreffende Shuttle 7.2 seinen Auftrag zum Auslagern nicht mehr ausführen, weil es nicht an dem auf Lagerplatz B1 oder B2 abgestellten Fördergutvorbeikommt, welches zuvor von Shuttle 7.1 dort platziert wurde. Es konnte also zu einer Blockade-Situation kommen. Das nicht beladene Shuttle 7.1 müsste also einen Auftrag zur Umlagerung des auf dem Lagerplatz B1 oder B2 abgestellten Förderguts erhalten, bevor es seinen Auslagerungsauftrag betreffend das Fördergut 8 auf Lagerplatz B3 durchführen kann.

Insbesondere das erste und das vierte Verfahren gemäss der vorliegenden Erfindung können die vorstehend mit Hinblick auf Figur 3 beschriebene Blockade-Situation auf die Weise verhindern, welche mit Hinblick auf die Figuren 1 und 2 schon beschrieben wurde.

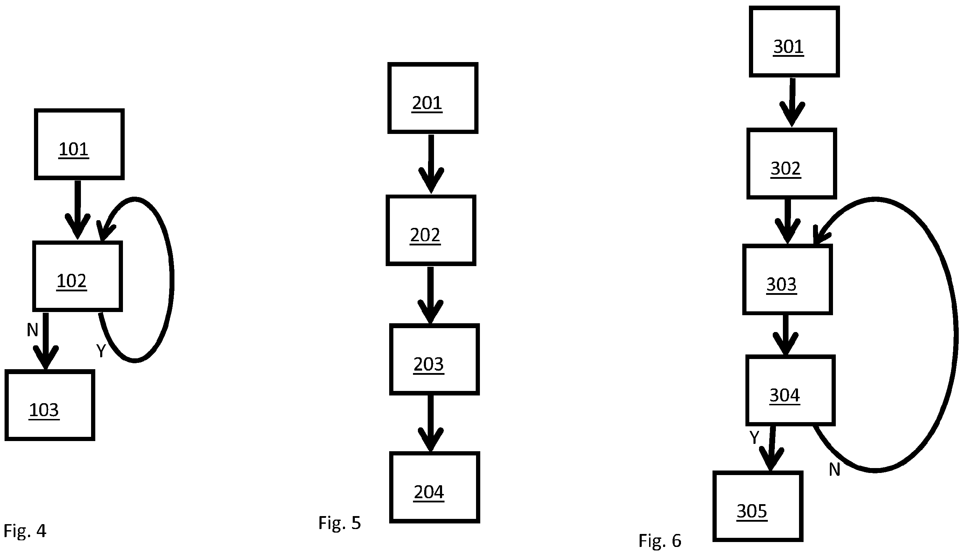

Figur 4 zeigt ein Flussdiagramm eines Ausführungsbeispiels eines ersten Verfahrens gemäss der vorliegenden Erfindung mit folgenden Verfahrensschritten:
Verfahrensschritt 101: Ein aktiver Auftrag bezüglich eines Lagerkanals liegt vor, insbesondere in der Steuerungseinrichtung.

Verfahrensschritt 102: Die Steuerungseinrichtung prüft, ob ein offener Auftrag betreffend denselben Lagerkanal vorliegt.

N: Ergibt die Prüfung, dass kein offener Auftrag betreffend denselben Lagerkanal vorliegt, so folgt Verfahrensschritt 103.

Y: Ergibt die Prüfung, dass ein offener Auftrag betreffend denselben Lagerkanal vorliegt, so wird Verfahrensschritt 102 wiederholt.

Verfahrensschritt 103: Die Steuerungseinrichtung vergibt den aktiven Auftrag aus Schritt 101 an ein Shuttle; der vormals aktive Auftrag ist damit offen.

Figur 5 zeigt ein Flussdiagramm eines Ausführungsbeispiels eines zweiten Verfahrens gemäss der vorliegenden Erfindung mit folgenden Verfahrensschritten:
Verfahrensschritt 201: Ein Shuttle erhält einen Auftrag zum Einlagern eines Förderguts, wobei dieser Auftrag den Lagerkanal, aber nicht den Lagerplatz spezifiziert.

Verfahrensschritt 202: Das Shuttle erreicht den Kanal-Eingang des auftragsgemässen Lagerkanals.

Verfahrensschritt 203: Das Shuttle erhält eine Spezifizierung des Auftrags hinsichtlich des zu wählenden Lagerplatzes innerhalb des Lagerkanals für die Einlagerung.

Verfahrensschritt 204: Das Shuttle lagert das Fördergut auf dem in Verfahrensschritt 203 spezifizierten Lagerplatz ein.

Figur 6 zeigt ein Flussdiagramm eines Ausführungsbeispiels eines dritten Verfahrens gemäss der vorliegenden Erfindung mit folgenden Verfahrensschritten:
Verfahrensschritt 301: Ein Shuttle erhält einen Auftrag zum Einlagern eines Förderguts, wobei dieser Auftrag den Lagerkanal, aber nicht den Lagerplatz spezifiziert.

Verfahrensschritt 302: Das Shuttle erreicht den Kanal- Eingang des auftragsgemässen Lagerkanals und fährt in diesen Lagerkanal ein.

Verfahrensschritt 303: Das Shuttle bewegt sich im Lagerkanal in Einfahrt-Richtung vorwärts.

Verfahrensschritt 304: Das Shuttle prüft mittels eines Sensors, ob in Einfahrt-Richtung ein belegter Lagerplatz vorliegt.

N: Ergibt die Prüfung, dass in Einfahrt-Richtung kein belegter Lagerplatz vorliegt, so werden die Verfahrens-Schritte 303 und 304 wiederholt.

Y: Ergibt die Prüfung, dass in Einfahrt-Richtung ein belegter Lagerplatz vorliegt, so folgt Verfahrens-Schritt 305.

Verfahrens-Schritt 305: Das Shuttle lagert das Fördergut auf dem in Einfahrt-Richtung letzten freien Lagerplatz vor dem in Verfahrens-Schritt 304 erkannten belegten Lagerplatz ein.

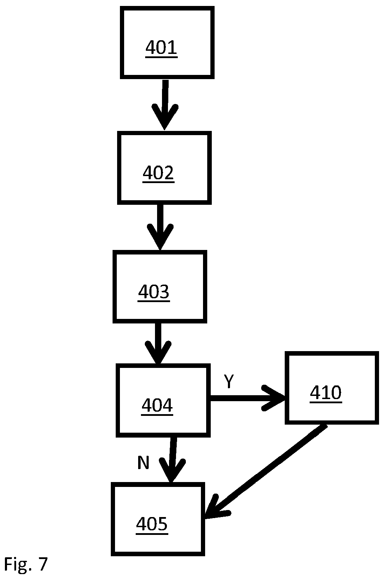

Figur 7 zeigt ein Flussdiagramm eines Ausführungsbeispiels eines vierten Verfahrens gemäss der vorliegenden Erfindung mit folgenden Verfahrensschritten:
Verfahrens-Schritt 401: Es liegen ein erster aktiver Auftrag und ein zweiter aktiver Auftrag, welche denselben Lagerkanal betreffen.

Verfahrens-Schritt 402: Die Steuerungseinrichtung ordnet die aktiven Aufträge in eine Reihenfolge, so dass nach Abarbeitung der Aufträge in dieser Reihenfolge kein unbelegter Lagerplatz zwischen zwei belegten Lagerplätzen im betreffenden Lagerkanal verbleibt.
Verfahrens-Schritt 403: Die Steuerungseinrichtung berechnet für den ersten aktiven Auftrag einen zu erwartenden Endzeitpunkt einer Auftragslaufzeit und für den zweiten aktiven Auftrag einen zu erwartenden Zeitpunkt, an welchem ein diesen zweiten aktiven Auftrag durchführendes zweites Shuttle voraussichtlich am Kanal-Eingang eintrifft
Verfahrens-Schritt 404: Die Steuerungseinrichtung prüft, ob ein Zeitraum zwischen dem zu erwartenden Endzeitpunkt des ersten aktiven Auftrags und dem zu erwartenden Eintreffen des den zweiten Auftrag durchführenden Shuttles am Kanal-Eingang eine vorgegebene minimale Länge unterschreitet

Y: Ergibt die Prüfung, dass die vorgegebene minimale Länge unterschritten ist, so folgt Schritt 410.

N: Ergibt die Prüfung, dass die vorgegebene minimale Länge nicht unterschritten ist, so folgt Schritt 405.

Verfahrens-Schritt 405: Die Steuerungseinrichtung vergibt die Aufträge an die Shuttles.

Verfahrens-schritt 410: Die Steuerungseinrichtung modifiziert den zweiten aktiven Auftrag derart, dass zwischen dem Verlassen des Lagerkanals durch ein den ersten Auftrag durchführendes erstes Shuttle und dem Eintreffen das den zweiten Auftrag durchführende zweiten Shuttles am Kanal-Eingang voraussichtlich ein Zeitraum mit der vorgegebenen minimalen Länge liegt.

In den neun Zeilen der Figur 9 sind neun Fälle #1, ..., #9 in Bezug auf die beiden Shuttles 7A, 7B in Figur 8 und den dort gezeigten Lagerkanal dargestellt, in welchem zwei Fördergüter 8 in den Lagerplätzen 4 und 5 eingelagert sind. Die neun Fälle in Figur 9 beziehen sich teilweise auch auf eine Situation, in der zumindest eines der Shuttles 7A, 7B mit einem einzulagernden Fördergut beladen ist. Dies ist in Figur 8 der Übersicht halber jedoch nicht dargestellt.

Anhand der Figuren 8 und 9 kann leicht nachvollzogen werden, welche Situation eintritt, wenn auftragsgemäss geplant war, dass das erste Shuttle 7A zuerst am Lagerkanal ankommt, tatsächlich aber das zweite Shuttle 7B zuerst dort eintrifft.

Für jeden der dargestellten Fälle #1 ff. ist in Figur 9 dargestellt, ob das erste Shuttle 7A einlagern oder auslagern soll ("EIN" bzw. "AUS"). Weiterhin ist angegeben, auf welchem Lagerplatz die Lageroperation durchgeführt werden soll (bspw. "3" bzw. "4"), oder ob nur der Lagerkanal, nicht jedoch der Lagerplatz auftragsgemäss spezifiziert wurde ("X"). Dasselbe gilt für das zweite Shuttle 7B.

Bei den mit "X" markierten Fällen können die Verfahrensschritte des zweiten oder dritten Verfahrens gemäss der vorliegenden Erfindung zur Anwendung kommen. Hierbei kann in einigen Fällen, sofern die Verfahrensschritte des zweiten und dritten Verfahrens nicht für das erste und das zweite Shuttle 7A, 7B angewandt werden, weiterhin eine Blockade-Situation oder eine zu niedrige Lagerdichte auftreten. Eine solche Situation kann mit dem vierten Verfahren gelöst werden.

In Figur 9 ist ferner angegeben, welche der drei im Rahmen des vierten Verfahrens angedachten Modifikationen die drohende Blockade-Situation und die drohende zu niedrige Lagerdichte verhindern können.

Gemäss Fall #1 soll das erste Shuttle 7A sein Fördergut (in Figur 8 nicht dargestellt) auf irgendeinem der Lagerplätze 1 bis 3 einlagern; das zweite Shuttle 7B soll sein Fördergut (in Figur 8 nicht dargestellt) auf Lagerplatz 2 einlagern. Kommt das zweite Shuttle 7B zuerst am Kanal-Eingang an und lagert ohne Modifikation auftragsgemäss ein, so bleibt Lagerplatz 3 leer, die Lagerdichte ist zu niedrig. Das später eintreffende erste Shuttle würde sein Fördergut auf Lagerplatz 1 einlagern.

Eine Anpassung der Auftragslaufzeiten im Sinne einer Variante der ersten Modifikation könnte die drohende zu niedrige Lagerdichte vermieden werden. Durch die erste Modifikation könnte nämlich dafür gesorgt werden, dass, wie ursprünglich angedacht, das erste Shuttle 7A zuerst am Lagerkanal ankommt. Das erste Shuttle 7A würde dann auf Lagerplatz 3 einlagern, das zweite Shuttle 7B auf Lagerplatz 2.

Durch einen Auftrags-Tausch im Sinne der zweiten Modifikation könnte dasselbe Ergebnis erreicht werden: Das zweite Shuttle 7B würde dann auf Lagerplatz 3 einlagern, das erste Shuttle 7A auf Lagerplatz 2.

Durch eine alternative Lagerplatz-Zuweisung im Sinne der dritten Modifikation könnte ebenfalls eine drohende zu niedrige Lagerdichte vermieden werden. Hierfür müsste dem Shuttle 7B ein Lagerplatz ausserhalb des in Figur 8 gezeigten Lagerkanals zugewiesen werden. Das "zu schnelle" Shuttle 7B müsste also einen anderen Lagerkanal ansteuern.

Gemäss Fall #2 gilt zusätzlich zu den Ausführungen zu Fall #1, dass bei Ankunft des "zu späten" ersten Shuttles 7A eine Blockade-Situation eintreten würde, weil das erste Shuttle 7A nicht bis zu dem auftragsgemäss vorgesehenen Lagerplatz 3 fahren kann. Schliesslich hat das zweite Shuttle 7B bereits sein Fördergut auf dem Lagerplatz 2 eingelagert. Die in Bezug auf Fall #1 diskutierten Modifikationen würden jedoch auch diese Blockade-Situation verhindern.

Hierbei könnte im Fall #2 eine alternative Lagerplatz-Zuweisung auch für das erste Shuttle 7A anstatt für das zweite Shuttle 7B erfolgen, wobei das "verspätet" eintreffende Shuttle 7A auf einen alternativen Lagerplatz in einem anderen Lagerkanal oder auf den Lagerplatz 1 im selben Lagerkanal verwiesen wird. Dadurch würde jedoch nur die Blockade-Situation gelöst, die zu niedrige Lagerdichte bliebe bestehen. Dies kann aber in einigen Fällen akzeptabel sein, weil die zu niedrige Lager-Dichte häufig weniger Probleme bereitet als eine Blockade-Situation, insbesondere eine dauerhafte Blockade-Situation.

Die im Fall #2 (ohne Modifikation) auftretende Blockade-Situation wäre dauerhaft, würde also nicht enden, wenn das "verspätete" erste Shuttle 7A am Lagerkanal eintrifft. Ohne Modifikation könnte die Blockade-Situation nur gelöst werden, indem die Lageroperation des "zu früh" eingetroffenen - bzw. im Vergleich zum Shuttle 7A "nicht verspäteten" - zweiten Shuttles 7B rückgängig gemacht wird.

Gemäss Fall #3 kann das zweite Shuttle 7B auf einem beliebigen Lagerplatz einlagern, während das erste Shuttle 7A auf Lagerplatz 3 einlagern soll. Das zuerst ankommende zweite Shuttle 7B wird also auf Lagerplatz 3 einlagern und das später ankommende erste Shuttle 7A dadurch blockieren, da sein auftragsgemäss zugewiesener Lagerplatz 3 belegt ist. Eine zu niedrige Lagerdichte droht indes nicht, weil durch das Einlagern auf Lagerplatz 3 kein unbelegter Lagerplatz zwischen zwei belegten Lagerplätzen entsteht.

Die im Fall #3 auftretende Blockade-Situation ist dauerhaft, wird also nicht automatisch durch die Ankunft des ersten Shuttles 7A gelöst.

Werden die für die Fälle #1 und #2 diskutierten Modifikationen für die Konstellation gemäss Fall #3 angewandt, so tritt auch dort die drohende Blockade-Situation nicht ein.

Wie bereits für Fall #2 besprochen könnte auch für Fall #3 die alternative Lagerplatz-Zuweisung für das erste Shuttle 7A anstatt für das zweite Shuttle 7B erfolgen. Hierbei tritt im Fall #3 eine zu niedrige Lagerdichte ein, weil das "zu spät" eintreffende erst Shuttle 7A nach einer alternativen Lagerplatz-Zuweisung beispielsweise auf dem Lagerplatz 2 einlagern könnte, während das "zu früh" eingetroffene zweite Shuttle 7B bereits auf Lagerplatz 3 eingelagert hat.

Fall #4 betrifft eine Konstellation, welche nur der besseren Übersicht halber in die Matrix nach Figur 9 aufgenommen wurde. Fall #4 erfordert keine Modifikation des Auftrags gemäss dem vierten Verfahren, weil weder eine zu niedrige Lagerdichte noch eine Blockade droht. Vielmehr handelt es sich hierbei um eine Konstellation, in welcher das erste Shuttle 7A und das zweite Shuttle 7B gemäss dem zweiten oder dem dritten Verfahren der vorliegenden Erfindung den Lagerkanal ansteuern, ohne dass der Lagerplatz vorab spezifiziert wäre. Der Fall #4 zeigt also, dass das dritte und das vierte Verfahren zuverlässig zu niedrige Lagerdichten und drohende Blockaden verhindern können, insbesondere, wenn diese Verfahren zumindest dann angewandt werden, sobald für einen einzigen Lagerkanal mehrere Aufträge vergeben wurden, d.h. offen sind.

Die Fälle #5 und #6 betreffend die eher seltene Konstellation, wonach das vom ersten Shuttle 7A einzulagernde Fördergut unmittelbar vom zweiten Shuttle 7B wieder ausgelagert werden soll. Dies kann beispielsweise bei einem Umlagern vorkommen. Kommt das erste Shuttle zu spät am Lagerkanal an, so kann das zweite Shuttle B seinen Auftrag nicht erfüllen.

Sofern das "zu früh" (bzw. "nicht verspätet") eintreffende zweite Shuttle 7B nicht im Lagerkanal wartet oder steckenbleibt und den Kanal-Eingang nicht blockiert, ist die Blockade-Situation nur vorübergehend. Jedoch kann auch eine vorübergehende Blockade-Situation so lange andauern, dass der Betrieb des Shuttle-Systems nachhaltig gestört wird oder seine Effizienz spürbar sinkt. Daher ist es vorteilhaft, auch vorübergehende Blockade-Situationen durch eine Modifikation im Sinne des vierten Verfahrens zu verhindern.

Hierbei kann nur die erste Modifikation beim Auftreten der Fälle #5 und #6 Abhilfe schaffen.

Im Fall #7 ist gemäss Schritt a1 geplant, dass das erste Shuttle 7A den Lagerplatz 4 durch Auslagern des dort gelagerten Förderguts 8 zugänglich macht, sodass das zweite Shuttle 7B sein Fördergut dort abstellen bzw. einlagern kann. Hier tritt zwar keine zu niedrige Lagerdichte, jedoch eine zumindest vorübergehende Blockade-Situation auf, weil das zuerst ankommende zweite Shuttle 7B seinen Auftrag erst erfüllen kann, nachdem das verspätete Shuttle 7A seinen Auftrag ausgeführt hat.

Wie bei allen Fällen #1 bis #3 und #5 bis #9, in denen eine Blockade-Situation und/oder eine zu niedrige Lagerdichte droht, kann eine Anwendung der ersten Modifikation im Rahmen des vierten Verfahrens Abhilfe schaffen.

Im Fall #7 ist es ferner möglich, dem zweiten Shuttle 7B im Rahmen der dritten Modifikation einen alternativen Lagerplatz in einem anderen Lagerkanal zuzuweisen. Nur wenn dieser alternative Lagerplatz nicht in demselben Lagerkanal liegt, den auch das erste Shuttle 7A ansteuert, kann letzteres, nachdem es mit Verspätung an diesem Lagerkanal eintrifft, seine Auslager-Operation noch durchführen, ohne dass das vom zweiten Shuttle 7B abgestellte Fördergut dies verhindert.

Im Fall #8 kann das zweite Shuttle dank seines flexiblen, d.h. nur hinsichtlich des Lagerkanals spezifizierten Auftrags, das einzulagernde Fördergut problemlos auf dem Lagerplatz 3 einlagern, bevor das erste Shuttle 7A eintrifft. Dann liegt jedoch eine dauerhafte Blockade-Situation vor, da das erste Shuttle 7A, wenn es verspätet am Lagerkanal ankommt, nicht zu dem Lagerplatz 4 gelangen kann.

Die Blockade-Situation in Fall #8 kann auf die für Fall #7 bereits beschriebene Weise durch die dort geschilderten Modifikationen gelöst werden.

Im Fall #9 tritt eine nur vorübergehende Blockade-Situation auf, sofern das zuerst am Lagerkanal eintreffende Shuttle 7B weder den Lagerkanal noch dessen Kanal-Eingang blockiert, so dass das später eintreffende erste Shuttle 7A seinen Auslagerungs-Auftrag durchführen kann.

Um die vorübergehende Blockade-Situation zu lösen, kommt neben der ersten Modifikation auch die zweite Modifikation in Frage. Wenn nämlich das zuerst eintreffende zweite Shuttle 7B das auf Lagerplatz 4 eingelagerte Fördergut auslagert und das später eintreffende erste Shuttle 7A das auf Lagerplatz 5 eingelagerte Fördergut auslagert, tritt keine Blockade-Situation ein.

**Obwohl nur einige bevorzugte Ausführungsbeispiele der Erfindung beschrieben und dargestellt wurde/n, ist es offensichtlich, dass der Fachmann zahlreiche Modifikationen hinzufügen kann, ohne Wesen und Umfang der Erfindung zu verlassen.**

Die Spezifizierung in Verfahrens-Schritt 203 in Figur 4 kann zentral, beispielsweise von der Steuerungseinrichtung, oder dezentral erfolgen.

Die Verfahrens-Schritte 303 und 304 in Figur 6 können wie abgebildet sequentiell oder auch simultan durchgeführt werden.

An den Verfahrens-Schritt 305 in Figur 6 kann sich ein optionaler Verfahrens-Schritt 306 (nicht dargestellt) anschliessen, falls fehlerbedingt im Lagerkanal kein Lagerplatz mehr frei ist. Gemäss diesem Schritt 306 kann dem Shuttle ein alternativer Lagerkanal zugewiesen werden.

An den Verfahrens-Schritt 305 in Figur 6 kann sich ferner ein Verfahrens-Schritt 307 (nicht dargestellt) anschliessen, welcher eine Mitteilung der Position des Shuttles beim Ablegen, somit also eine Mitteilung einer Position des eingelagerten Förderguts, beispielsweise an die Steuerungseinrichtung umfasst.

Der in Figur 2 dargestellte Sensor 10 muss nicht mit Wellen 12 arbeiten, sondern kann beispielsweise auch mit Strahlen oder anderweitig arbeiten.

Der in den Figuren 1 bis 3 dargestellte Ausschnitt zeigt lediglich einen Teil eines Fahrwegs 5 und einige der Lagerkanäle 6A, ...,6D einer Ebene. Üblicherweise vorhandene parallel verlaufende Fahrwege 5 sowie Verbindungswege zwischen diesen Fahrwegen 5, weitere Lagerkanäle 6 sowie weitere Shuttles 7 und weitere Ebenen umfassend die vorgenannten Komponenten sind der Übersicht halber nicht dargestellt, in Ausführungsformen der vorliegenden Erfindung jedoch vorhanden.

Sämtliche Shuttles 7 können mit dem Sensor 10 gemäss Figur 2 ausgestattet sein, obwohl dieser nur für das Shuttle 7.1 in Figur 2 eingezeichnet wurde. Insbesondere können Sensoren, welche üblicherweise bereits als Bordmittel bekannter Shuttles benutzt werden, zum Einsatz kommen.

**Bezugszeichenliste**

| | | | | | |
|---|---|---|---|---|---|
| 1 | Lagertiefe 1 | | | D1...D4 | Lagerplätze von Lagerkanal 6D |
| 2 | Lagertiefe 2 | | | C1...C4 | Lagerplätze von Lagerkanal 6C |
| 3 | Lagertiefe 3 | | | B1...B4 | Lagerplätze von Lagerkanal 6B |
| 4 | Lagertiefe 4 | | | A1...A4 | Lagerplätze von Lagerkanal 6A |
| 5 | Fahrweg | | | | |
| 6 | Lagerkanal | | | | |
| 7 | Shuttle | | | | |
| 8 | Fördergut | | | | |
| 9 | Kanal-Eingang | | | | |
| 10 | Sensor | | | | |
| 11 | Fahrtrichtung | | | | |
| 12 | Wellen | | | | |
| 13 | Einfahrt-Richtung | | | | |
| 14 | | | | | |
| 15 | | | | | |
| 16 | | | | | |
| 17 | | | | | |
| 18 | | | | | |
| 19 | | | | | |
| 20 | | | | | |
| 21 | | | | | |
| 22 | | | | | |
| 23 | | | | | |
| 24 | | | | | |
| 25 | | | | | |
| 26 | | | | | |
| 27 | | | | | |
| 28 | | | | | |
| 29 | | | | | |
| 30 | | | | | |
| 31 | | | | 101, 102, 201, ... | Verfahrens-Schritte |
| 32 | | | | N | No, Nein |
| 33 | | | | Y | Yes, Ja |

## Patentansprüche

1. Verfahren zum Betreiben eines Shuttle-Systems mit Hilfe einer Steuerungseinrichtung, wobei das Shuttle-System ein Regal mit einem Fahrweg (5) und einem mehrfachtiefen Lagerkanal (6A, 6B, 6C, 6D) mit zumindest zwei Lagerplätzen (A1, ..., A4; B1, ..., B4; C1, ...) umfasst, wobei das Shuttle-System weiterhin zumindest zwei Shuttles (7) umfasst, wobei die Shuttles (7) eingerichtet sind, Fördergüter (8) ein-, aus- oder umzulagern, wobei die Shuttles (7) Aufträge zum Ein-, Aus- oder Umlagern eines Förderguts (8) von der Steuerungseinrichtung erhalten, wobei zum Verhindern einer Blockade-Situation und /oder zur Erhöhung einer Lagerdichte die folgenden Schritte ausgeführt werden:
- Sobald ein aktiver Auftrag zum Ein-, Aus- oder Umlagern eines Förderguts (8) betreffend einen bestimmten Lagerkanal (6A, 6B, 6C, 6D) vorliegt, prüft die Steuerungseinrichtung, ob ein offener Auftrag zum Ein-, Aus- oder Umlagern betreffend diesen Lagerkanal (6A, 6B, 6C, 6D) vorliegt
- Liegt kein solcher offener Auftrag vor, so vergibt die Steuerungseinrichtung den aktiven Auftrag
- Liegt ein solcher offener Auftrag vor, so vergibt die Steuerungseinrichtung den aktiven Auftrag entweder erst dann, wenn der offene Auftrag erledigt wurde,
- oder die Steuerungseinrichtung modifiziert den aktiven Auftrag dahingehend, dass ein Lagerkanal gewählt wird, zu welchem kein offener Auftrag vorliegt.

2. Verfahren zum Betreiben eines Shuttle-Systems mit Hilfe einer Steuerungseinrichtung, wobei das Shuttle-System ein Regal mit einem Fahrweg (5) und einem mehrfachtiefen Lagerkanal (6A, 6B, 6C, 6D) mit zumindest zwei Lagerplätzen (A1, ..., A4; B1, ..., B4; C1, ... umfasst, wobei das Shuttle-System weiterhin zumindest zwei Shuttles (7) umfasst, wobei die Shuttles (7) eingerichtet sind, Fördergüter (8) ein-, aus- oder umzulagern, wobei die Shuttles (7) Aufträge zum Ein-, Aus- oder Umlagern eines Förderguts (8) von der Steuerungseinrichtung erhalten, wobei zum Verhindern einer Blockade-Situation und/oder zur Erhöhung einer Lagerdichte die folgenden Schritte ausgeführt werden:
- Ein Shuttle (7) erhält einen Auftrag zum Einlagern eines Förderguts (8), wobei dieser Auftrag den anzusteuernden Lagerkanal (6A, 6B, 6C, 6D), nicht aber den Lagerplatz (A1, ..., A4; B1, ..., B4; C1, ...) spezifiziert
- Unmittelbar bevor das Shuttle (7) in den Lagerkanal (6A, 6B, 6C, 6D) einfährt, wird der Auftrag dahingehend spezifiziert, dass dem Shuttle (7) der Lagerplatz (A1, ..., A4; B1, ..., B4; C1, ...) mitgeteilt wird, auf dem das Fördergut (8) eingelagert werden soll.

3. Verfahren zum Betreiben eines Shuttle-Systems mit Hilfe einer Steuerungseinrichtung, wobei das Shuttle-System ein Regal mit einem Fahrweg (5) und einem mehrfachtiefen Lagerkanal (6A, 6B, 6C, 6D) mit zumindest zwei Lagerplätzen (A1, ..., A4; B1, ..., B4; C1, ...) umfasst, wobei das Shuttle-System weiterhin zumindest zwei Shuttles (7) umfasst, wobei die Shuttles (7) eingerichtet sind, Fördergüter (8) ein-, aus- oder umzulagern, wobei die Shuttles (7) Aufträge zum Ein-, Aus- oder Umlagern eines Förderguts (8) von der Steuerungseinrichtung erhalten, wobei zum Verhindern einer Blockade-Situation und/oder zur Erhöhung einer Lagerdichte die folgenden Schritte ausgeführt werden:
- Ein Shuttle (7) erhält einen Auftrag zum Einlagern eines Förderguts (8), wobei dieser Auftrag den anzusteuernden Lagerkanal (6A, 6B, 6C, 6D), nicht aber den Lagerplatz (A1, ..., A4; B1, ..., B4; C1, ...) spezifiziert
- Das Shuttle (7) fährt in den Lagerkanal (6A, 6B, 6C, 6D) ein und bewegt sich anschliessend innerhalb des Lagerkanals (6A, 6B, 6C, 6D) fort
- Während dieses Fortbewegens wird mittels eines Sensors (10) überprüft, ob die vor dem Shuttle (7) liegenden Lagerplätze (A1, ..., A4; B1, ..., B4; C1, ...) frei oder belegt sind,
- Erkennt der Sensor (10) einen belegten Lagerplatz (A1, ..., A4; B1, ..., B4; C1, ...), so wird das Fördergut auf dem unmittelbar an den belegten Lagerplatz (A1, ..., A4; B1, ..., B4; C1, ...) angrenzenden freien Lagerplatz (A1, ..., A4; B1, ..., B4; C1, ...) eingelagert
- Erkennt der Sensor (10) keinen belegten Lagerplatz (A1, ..., A4; B1, ..., B4; C1, ...), so wird das Fördergut (8) im Falle eines als Sackgasse ausgebildeten Lagerkanals (6A, 6B, 6C, 6D) auf dem in einer Einfahrt-Richtung (13) letzten Lagerplatz (A1, ..., A4; B1, ..., B4; C1, ...) innerhalb des Lagerkanals (6A, 6B, 6C, 6D) eingelagert; im Falle eines Lagerkanals (6A, 6B, 6C, 6D) mit zwei Kanal-Eingängen (9) wird das Fördergut (8) auf einem in der Mitte des Lagerkanals (6A, 6B, 6C, 6D) befindlichen Lagerplatz (A1, ..., A4; B1, ..., B4; C1, ...) oder auf dem in Einfahrt-Richtung letzten Lagerplatz (A1, ..., A4; B1, ..., B4; C1, ...) eingelagert.

4. Verfahren zum Betreiben eines Shuttle-Systems mit Hilfe einer Steuerungseinrichtung, wobei das Shuttle-System ein Regal mit einem Fahrweg (5) und einem mehrfachtiefen Lagerkanal (6A, 6B, 6C, 6D) mit zumindest zwei Lagerplätzen (A1, ..., A4; B1, ..., B4; C1, ...) umfasst, wobei das Shuttle-System weiterhin zumindest zwei Shuttles (7) umfasst, wobei die Shuttles (7) eingerichtet sind, Fördergüter (8) ein-, aus- oder umzulagern, wobei die Shuttles (7) Aufträge zum Ein-, Aus- oder Umlagern eines Förderguts (8) von der Steuerungseinrichtung erhalten, wobei zum Verhindern einer Blockade-Situation und/oder zur Erhöhung einer Lagerdichte die folgenden Schritte ausgeführt werden:
a1. Liegen zumindest zwei aktive oder offene Aufträge zum Ein-, Aus- oder Umlagern für einen Lagerkanal (6A, 6B, 6C, 6D) vor, so ordnet die Steuerungseinrichtung zumindest einen ersten und einen zweiten aktiven oder offenen Auftrag in einer Reihenfolge an,
b1. Die Steuerungseinrichtung berechnet für einen ersten aktiven oder offenen Auftrag einen zu erwartenden Endzeitpunkt einer Auftragslaufzeit oder einen Zeitpunkt, an welchem ein diesen ersten Auftrag durchführendes Shuttle (7) voraussichtlich am Kanal-Eingang (9) eintrifft,
b2. Die Steuerungseinrichtung berechnet für einen zweiten aktiven oder offenen Auftrag einen zu erwartenden Endzeitpunkt einer Auftragslaufzeit oder einen Zeitpunkt, an welchem ein diesen zweiten Auftrag durchführendes Shuttle (7) voraussichtlich am Kanal-Eingang (9) eintrifft,
c1. Die Steuerungseinrichtung vergleicht die für beide Aufträge gemäss den Schritten b1 und b2 berechneten Zeitpunkte,
d1. Falls der gemäss Schritt b2 berechnete Zeitpunkt für den zweiten Auftrag vor dem gemäss Schritt b1 berechneten Zeitpunkt für den ersten Auftrag liegt, modifiziert die Steuerungseinrichtung den ersten Auftrag und/oder den zweiten Auftrag.

5. Verfahren nach Anspruch 2, **dadurch gekennzeichnet, dass** dem Shuttle (7) der Lagerplatz (A1, ..., A4; B1, ..., B4; C1, ...), auf dem das Fördergut (8) eingelagert werden soll, durch die Steuerungseinrichtung mitgeteilt wird.

6. Verfahren nach Anspruch 2, **dadurch gekennzeichnet, dass** dem Shuttle (7) der Lagerplatz (A1, ..., A4; B1, ..., B4; C1, ...), auf dem das Fördergut (8) eingelagert werden soll, durch ein Routingsystem mitgeteilt wird.

7. Verfahren nach Anspruch 3, **dadurch gekennzeichnet, dass** der Sensor (10) am Shuttle (7) angebracht ist.

8. Shuttle-System umfassend eine Steuerungseinrichtung, wobei das Shuttle-System ein Regal mit einem Fahrweg (5) und einem mehrfachtiefen Lagerkanal (6A, 6B, 6C, 6D) mit zumindest zwei Lagerplätzen (A1, ..., A4; B1, ..., B4; C1, ...) umfasst, wobei das Shuttle-System weiterhin zumindest zwei Shuttles (7) umfasst, wobei die Shuttles (7) eingerichtet sind, Fördergüter (8) ein-, aus- oder umzulagern, wobei die Shuttles (7) Aufträge zum Ein-, Aus- oder Umlagern eines Förderguts (8) von der Steuerungseinrichtung erhalten, wobei die Steuerungseinrichtung zum Verhindern einer Blockade-Situation und/oder zur Erhöhung einer Lagerdichte eingerichtet ist, die Verfahrensschritte gemäss zumindest einem der Ansprüche 1 bis 7 durchzuführen.
